# EUROPEAN PATENT SPECIFICATION

(11) **EP 2 452 983 B1**
(45) Date of publication and mention of the grant of the patent: **02.01.2019**
(21) Application number: 10797144.2
(22) Date of filing: 07.07.2010
(51) Int. Cl.: C08L 101/02, C08K 3/04, C08K 5/00, C08L 65/00, C08L 79/00, H01B 1/20, H01L 31/04, H01M 14/00, H01B 1/06, C08J 5/20, C08G 61/12, C08G 73/02, C08K 7/24, C08L 79/02, H01G 9/20

(54) **COMPOSITION FOR SOLID ELECTROLYTE AND SOLAR CELL USING SAME**
ZUSAMMENSETZUNG FÜR FESTELEKTROLYT UND SOLARZELLE DAMIT
COMPOSITION POUR ÉLECTROLYTE SOLIDE ET CELLULE SOLAIRE L UTILISANT

(30) Priority: 08.07.2009 JP 2009162182
(43) Date of publication of application: 16.05.2012
(73) Proprietor: Soken Chemical & Engineering Co., Ltd., Toshima-ku Tokyo 171-8531 (JP)
(72) Inventor: OKAMOTO, Syuji, Sayama-shi Saitama 350-1320 (JP); KOBAYASHI, Fumiaki, Sayama-shi Saitama 350-1320 (JP)
(74) Representative: Gulde & Partner
(86) International application number: PCT/JP2010/061514
(87) International publication number: WO 2011/004833

(56) References cited:
- EP-A1- 1 244 168
- WO-A1-2009/013942
- WO-A1-2009/131012
- WO-A2-2008/010978
- JP-A- 2001 106 782
- JP-A- 2004 307 722
- JP-A- 2007 126 507
- JP-A- 2008 045 061
- JP-A- 2008 121 014
- JP-A- 2008 179 809
- JP-B2- 3 906 071
- JP-T- 2005 508 418
- GHOSH S ET AL: "NETWORKS OF ELECTRON-CONDUCTING POLYMER IN MATRICES OF ION-CONDUCTING POLYMERS APPLICATIONS TO FAST ELECTRODES", ELECTROCHEMICAL AND SOLID-STATE LETTERS, IEEE SERVICE CENTER, PISCATAWAY, NJ, US, vol. 3, no. 5, 1 May 2000 (2000-05-01), - 15 March 2000 (2000-03-15), pages 213-215, XP000953438, ISSN: 1099-0062, DOI: 10.1149/1.1391005
- CHEN F-C ET AL: "ENHANCED EFFICIENCY OF PLASTIC PHOTOVOLTAIC DEVICES BY BLENDING WITH IONIC SOLID ELECTROLYTES", APPLIED PHYSICS LETTERS, AIP, AMERICAN INSTITUTE OF PHYSICS, MELVILLE, NY, US, vol. 84, no. 16, 19 April 2004 (2004-04-19), pages 3181-3183, XP001217784, ISSN: 0003-6951, DOI: 10.1063/1.1710712
- DEAN M. DELONGCHAMP ET AL: "Fast Ion Conduction in Layer-By-Layer Polymer Films", CHEMISTRY OF MATERIALS, vol. 15, no. 5, 8 February 2003 (2003-02-08), pages 1165-1173, XP055077684, ISSN: 0897-4756, DOI: 10.1021/cm020945a

## Description

### Technical Field

The present invention relates to a composition for a solid electrolyte and a solar cell using the composition.

### Background Art

The role of an electrolyte layer in a dye-sensitized solar cell is important, and in usual, redox ability of I⁻/I₃⁻ due to a combination of iodine and iodine anion such as lithium iodide is utilized. On this account, when a dye-sensitized solar cell of high efficiency is aimed, it is necessary to use a solvent having a high degree of ion dissociation for the electrolyte layer and to use conditions under which diffusion of iodine ions can be carried out at a satisfactory rate, in order to sufficiently bring out iodine redox efficiency. However, when use of solar cells is considered, a liquid electrolyte layer needs strict sealing from the viewpoints of prevention of leakage or volatilization of a liquid, etc. Further, for the exertion of iodine redox, introduction of iodine anion and iodine molecule becomes necessary, and this sometimes causes problems of corrosion and deterioration of the materials.

As a means to solve these problems, a technique of using a high-boiling slightly volatile solution as a solvent has been proposed, but the problems have not been essentially solved yet. A technique of using a non-volatile ionic liquid for an electrolytic substrate has been also proposed (e.g., JP 1999-86632 A). However, only by the ionic liquid substrate, sufficient oxidation-reduction function cannot be actually obtained, and it is necessary to introduce iodine molecules. In this case, the electrolyte viscosity is increased, and sufficient ion diffusion ability cannot be obtained. In these techniques, further, a liquid substance is substantially used, and a problem of sealing has not been essentially solved. Then, a technique of mixing an electrolytic solution with a gelling agent or the like to form a gel, a technique of making an iodine redox couple, which becomes an electrolytic substrate, into a solid solution (dissociating and dissolving it in vinylidene polyfluoride that is solid and capable of undergoing ion dissociation or in a polymer material such as polyethylene glycol, polyvinyl alcohol or polyvinyl pyrrolidone) to pseudo-solidify it, etc. have been proposed. In such a case, however, ion diffusion ability is deteriorated, and lowering of conversion efficiency and shortening of cell life become problems.

That is to say, the electrolyte in the dye-sensitized solar cell is required to have a satisfactory ion diffusion rate, and moreover, a redox couple to stabilize anion that has transferred an electron becomes necessary. However, this electrochemical cycle of electron contributes to lengthening of life of electric charge, differently from semiconductor combined type solar cells such as silicon, and this can be said to be a great feature of the dye-sensitized solar cells.

Then, taking into consideration physical difficulty in diffusion of molecular ions in the pseudo solid state, a technique of directly introducing an ion pair to the charge transfer material has been studied as a new proposal (e.g., WO 2009-013942 A) . In this technique, anion is stabilized by causing a conductive polymer to exert oxidation-reduction ability against unstable anion that has transferred an electron, and besides, a path of electric charge is formed by the use of the conductive polymer having charge transfer ability to make up for the insufficient ion diffusion. On this account, the electrolyte layer is obtained as a solid, and even if iodine is not used as an essential component, redox ability is exhibited.

EP 2 175 517 A1 discloses a solid polymer electrolyte layer comprising a conductive polymer doped with a doping agent and an ionic compound.

EP 1 244 168 A1 discloses an electrode for an electrochemical cell, where the electrode is composed of an electrode active material comprising sintered nanoparticles, a curable organic binder, and electrical conduction means.

Ghosh et al. (Electrochem. Solid-State Lett., 2000, 3, 213-215) disclose an active electrode comprising a blend of poly(3,4-ethylenedioxythiophene)-polystyrenesulfonate (PEDOT-PSS) and polyethylene oxide (PEO). PEDOT-PSS itself is a blend of PEDOT and PSS.

Chen et al. (Appl. Phys. Lett., 2004, 84, 3181-3183) disclose a structure comprising MEH:PPV:C₆₀:PEO:LiCF₃SO₃.

### Summary of Invention

### Technical Problem

In the WO 2009/013942 A, however, there is room for improvement in the efficiency because the ion pair and the conductive polymer are not sufficiently dissolved in each other. Polymers in which n-conjugation has been developed inherently have high flatness of polymer chain and have high crystallizability (stacking property) between polymer chains due to affinity of n-bonds. When such a π-conjugated polymer is doped with a dopant, the above flatness and crystallizability are more enhanced. On this account, solubility (solubility due to heat or solvent) of the π-conjugated polymer doped with a dopant is usually lowered. Therefore, an intimate-mixed state of the highly doped conductive polymer and the ion pair with each other on a molecular level cannot be obtained, and because of localization of the ion pair, ion dissociation becomes incomplete, so that sufficient power generation efficiency cannot be obtained occasionally.

To solve the above problems, it is necessary to intimately mix a conductive polymer with an ion pair on a higher molecular level by solubilizing an insoluble conductive polymer, and besides, a solid solution layer capable of sufficiently performing ion dissociation of ion pairs becomes necessary. With regard to a soluble conductive polymer, an attempt to prepare conductive polyaniline improved in solubility has been made in the JP 4,035,353 B. More specifically, a monomer of polyaniline is reacted with a surfactant agent comprising a metal sulfonate, ammonium sulfonate or phosphoric acid ester having a repeating unit of alkylene ether in its molecular structure in an aqueous solution to form an aniline-surfactant agent salt of an amphipathic structure, and this salt is subjected to oxidation polymerization as a monomer. Subsequently, to an aqueous solution of the conductive polyaniline obtained, a ketone-based solvent or an aromatic solvent is added to separate a supernatant liquid, and in the supernatant liquid, the conductive polyaniline and the solvent are compatibilized with each other to prepare a conductive polyaniline solution for forming a conductive coating film.

In the conductive polyaniline solution prepared in the JP 4, 035, 353 B, however, there is a problem that particulate conductive polyaniline remains and is not homogeneously dissolved. Moreover, when an ion pair is added to the conductive polyaniline solution, marked aggregation takes place because of interaction between the dopant component and the ion pair. Furthermore, since the ion pair cannot be made into a solid solution, satisfactory power generation efficiency cannot be obtained.

In the JP 2008-210696 A, a solid solution polymer of an electrolyte has been proposed. This polymer is characterized in that its structure is that of a crystalline polymer. However, the carrier of the polymer is only ion, and control of a dissociation constant of the ion pair added has not been carried out.

In the light of these existing techniques, reconciliation of efficient charge transfer and satisfactory charge life with each other has been desired.

### Solution to Problem

Accordingly, it is necessary to highly incorporate a charge transfer material which is capable of homogeneously making an ionic compound into a solid solution and makes up for insufficient diffusion of the ionic compound.

This problem can be solved by using, as a matrix layer, a polymer material which is capable of making an ion pair into a solid solution in a solid state and by mixing a charge transfer material with the polymer material in order to provide a satisfactory charge transfer path in the matrix layer. However, the charge transfer material used herein needs to have properties that it is not corrosive against ionic substances.

It is thought that the function is exerted by simply mixing the material capable of making an ion pair into a solid solution with the charge transfer substance, but a dopant material to be doped on the charge transfer material, such as a conductive polymer, has a function to make an ion pair into a solid solution, so that it is desirable to carry out homogenization on a higher molecular level. As an anode wherein a dye is to be fixed, a nanoporous titanium oxide layer or the like is generally used, and these pores need to be sufficiently filled with it. For the sufficient filling, it is more desirable that the solidifyingmaterial or the charge transfermaterial, or both of them are dissolved in a solvent. This is carried out to enhance fluidity, and when a solution diluted with a solvent is used, the solvent is usually vaporized after filling, to solidify the electrolyte.

That is to say, the present invention is concerned with the following.
[1] A composition for a solid electrolyte, comprising a polymer compound (A) and a charge transfer material, wherein the polymer compound (A) is a polymer compound obtained by polymerizing a monomer (a) comprising
   a monomer (a-1) having a sulfonic acid group or a sulfonate group and a polymerizable vinyl group; and
   a monomer (a-2) having a group having chelating ability and a polymerizable vinyl group, wherein the monomer (a-2) has a group represented by the following formula (IV) or a group represented by the following formula (V): 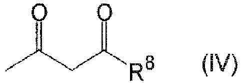 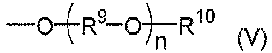 wherein R⁸ is an alkyl group of 1 to 4 carbon atoms, R⁹ is an ethylene group, R¹⁰ is an alkyl group of 1 to 4 carbon atoms, and n is an integer of 1 to 5.
[2] The composition for a solid electrolyte as stated in [1], wherein the charge transfer material is a carbon material and/or a π-conjugated polymer (β).
[3] The composition for a solid electrolyte as stated in [2], wherein the monomer (a-2) having chelating ability is contained in an amount of not less than 30% by mol in the monomer (a).
[4] The composition for a solid electrolyte as stated in [2] or [3], wherein the monomer (a-1) is contained in an amount of not more than 4% by mol in the monomer (a).
[5] The composition for a solid electrolyte as stated in any one of [2] to [4], wherein the carbon material is at least one substance selected from graphite, carbon black, fullerene and carbon nanotube.
[6] The composition for a solid electrolyte as stated in any one of [2] to [5], wherein the π-conjugated polymer (β) is a π-conjugated polymer obtained by polymerizing at least one monomer selected from monomers represented by the following formulas (I) to (III): 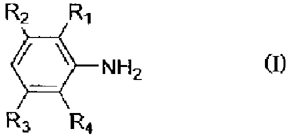 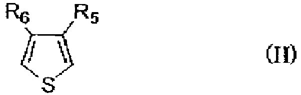 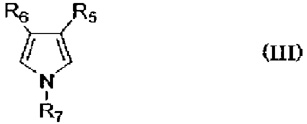 wherein R₁ to R₆ are each independently a hydrogen atom, an alkyl group of 1 to 12 carbon atoms or an alkoxy group of 1 to 10 carbon atoms, R₇ is a hydrogen atom, an alkyl group of 1 to 12 carbon atoms or an aromatic group, and R₅ and R₆ may be bonded to each other to form an alkylenedioxy group of 1 to 8 carbon atoms.
[7] The composition for a solid electrolyte as stated in [2], wherein
   the charge transfer material is a π-conjugated polymer (β), and
   the composition for a solid electrolyte is obtained by polymerizing a monomer in an electrolytic solvent in the presence of the polymer compound (A) and an oxidizing agent to form the π-conjugated polymer (β) and to simultaneously dope the π-conjugated polymer (β) with the polymer compound (A).
[8] The composition for a solid electrolyte as stated in [7], wherein the polymer compound (A) is a polymer compound obtained by polymerizing 10 to 50% by mol of the monomer (a-1), 10 to 90% by mol of the monomer (a-2) and 0 to 70% by mol of another monomer (a-3), the total amount of said monomers (a-1) to (a-3) being 100% by mol, wherein the monomer (a-3) is at least one monomer selected from the group consisting of a monomer (a-3-1) having a hydrophilic group and a polymerizable vinyl group, a monomer (a-3-2) having an aromatic group or an alicyclic group and a polymerizable vinyl group and a monomer (a-3-3) having an alkyl group and a polymerizable vinyl group.
[9] The composition for a solid electrolyte as stated in [7] or [8], wherein the π-conjugated polymer (β) is a π-conjugated polymer obtained by polymerizing at least one monomer selected from monomers represented by the following formulas (I) to (III) : 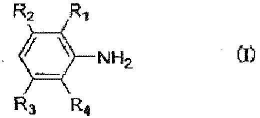 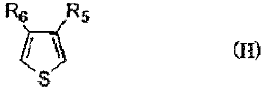 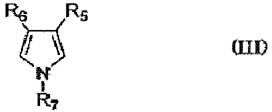 wherein R₁ to R₆ are each independently a hydrogen atom, an alkyl group of 1 to 12 carbon atoms or an alkoxy group of 1 to 10 carbon atoms, R₇ is a hydrogen atom, an alkyl group of 1 to 12 carbon atoms or an aromatic group, and R₅ and R₆ may be bonded to each other to form an alkylenedioxy group of 1 to 8 carbon atoms.
[10] A charge transport material for a solar cell, using the composition for a solid electrolyte as stated in any one of [1] to [9].

### Advantageous Effects of Invention

When a polymer electrolyte layer of a dye-sensitized solar cell is formed from the composition for a solid electrolyte of the present invention, efficient charge transfer and sufficient charge life can be reconciled with each other.

The composition for a solid electrolyte can be homogeneously dissolved or dispersed in a solvent, and a smooth film can be formed. Moreover, even if an ionic compound is blended with the solvent together with the composition for a solid electrolyte, a smooth film can be formed. In other words, by the use of the composition for a solid electrolyte of the present invention, a solution having high stability can be formed.

### Description of Embodiments

The composition (conductive polymer composition) for a solid electrolyte of the present invention is described in more detail hereinafter. In the present specification, (meth)acryl means acryl or methacryl, (meth)acryloyl means acryloyl or methacryloyl, and (meth)acrylate means acrylate or methacrylate.

The composition for a solid electrolyte of the present invention comprises a polymer compound (A) and a charge transfer material, and the polymer compound (A) is a polymer compound obtained by polymerizing a monomer (a) comprising a monomer (a-2) having chelating ability. More specifically, the composition for a solid electrolyte is a composition comprising a polymer compound (A) and a carbon material or a π-conjugated polymer (β) (embodiment 1 or 2), or a composition obtained by doping a π-conjugated polymer (β) with a polymer compound (A) (embodiment 3) . In the present specification, the "composition obtained by doping a π-conjugated polymer (β) with a polymer compound (A)" is also referred to simply as a "n-conjugated polymer (β) doped with a polymer compound (A)" or a "doped π-conjugated polymer (β)".

### Composition for solid electrolyte of embodiment 1

The composition for a solid electrolyte of the embodiment 1 comprises a polymer compound (A) and a carbon material. In the present specification, the "composition for a solid electrolyte of the embodiment 1" is also referred to simply as a "composition of the embodiment 1". The polymer compound (A) is obtained by polymerizing a monomer (a) comprising a monomer (a-2) having chelating ability. When such a composition of the embodiment 1 is blended with a solvent, a solution in which the composition is homogeneously dispersed is usually formed. When the composition is blended with a solvent together with an ionic compound, aggregation hardly takes place because the interaction between the polymer (A) and an ion pair is relatively weak. That is to say, the solution obtained from the composition for a solid electrolyte of the embodiment 1 has high stability.

As the monomer (a) to prepare the polymer compound (A), the monomer (a-2) having chelating ability and the monomer (a-1) having a sulfonic acid group or a sulfonate group are used, and another monomer (a-3) may be further used. In the present specification, the "monomer (a-1) having a sulfonic acid group or a sulfonate group", the "monomer (a-2) having chelating ability" and the "other monomer (a-3)" are also referred to simply as a "monomer (a-1)", a "monomer (a-2)" and a "monomer (a-3)", respectively.

The monomer (a-2) having chelating ability is a monomer containing a group having chelating ability (group which can coordinate to an ion, e.g., group which can coordinate to an ion derived from an ionic compound when the composition of the embodiment 1 is blended with a solvent together with the ionic compound). More specifically, as the ion (cationic species) derived from an ionic compound, lithium ion or ammonium ion (imidazolium ion or the like) is preferably used, as described later, and the group having chelating ability can coordinate to the cationic species in the solution. By virtue of this, a film obtained from the composition of the embodiment 1 exhibits high electrical conductivity. The monomer (a-2) may be used singly or as a mixture of two or more kinds.

The monomer (a-2) has a group having chelating ability and a polymerizable vinyl group. The group having chelating ability is a group represented by the following formula (IV) or a group represented by the following formula (V). An oxygen atom contained in the group represented by the following formula (IV) or the group represented by the following formula (V) can be readily coordinate to an ion (cationic species) derived from an ionic compound.

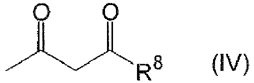

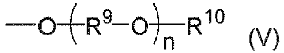

In the formula (IV), R⁸ is an alkyl group of 1 to 4 carbon atoms. Examples of the alkyl groups include methyl group, ethyl group, propyl group and butyl group. Of these, methyl group is more preferable.

In the formula (V), R⁹ is an ethylene group. R¹⁰ is an alkyl group of 1 to 4 carbon atoms. Examples of the alkyl groups include methyl group, ethyl group, propyl group and butyl group. Of these, methyl group is more preferable. n is an integer of 1 to 5.

Specific examples of such monomers (a-2) include 2-acetoacetoxyethyl (meth)acrylate, methoxyethyl (meth)acrylate, ethoxyethyl (meth)acrylate, butoxyethyl (meth)acrylate, methoxypolyethylene glycol (meth)acrylate, ethyl carbitol (meth)acrylate, methoxydiethylene glycol methacrylate, methoxytriethylene glycol (meth)acrylate.

The monomer (a-1) having a sulfonic acid group or a sulfonate group is a monomer having a sulfonic acid group or a sulfonate group and having a polymerizable vinyl group. The monomer (a-1) may be used singly or as a mixture of two or more kinds. The monomer (a-1) may have both a sulfonic acid group and a sulfonate group.

Examples of such monomers (a-1) include styrenesulfonic acid; styrenesulfonates, such as sodium styrenesulfonate, potassium styrenesulfonate and calcium styrenesulfonate; (meth)acrylic acid-ethyl-2-sulfonic acid; and (meth) acrylic acid ethyl 2-sulfonic acid salts, such as (meth) acrylic acid ethyl 2-sulfonic acid sodium salt, (meth)acrylic acid ethyl 2-sulfonic acidpotassiumsalt and (meth) acrylic acidethyl 2-sulfonic acid calcium salt. Of these, sodium styrenesulfonate and (meth) acrylic acid ethyl 2-sulfonic acid sodium salt are preferable because copolymerization with other copolymerizable monomers is readily carried out.

The other monomer (a-3) is a monomer other than the monomer (a-1) and the monomer (a-2) . As the other monomer (a-3), a monomer (a-3-1) having a hydrophilic group and a polymerizable vinyl group, a monomer (a-3-2) having an aromatic group or an alicyclic group and a polymerizable vinyl group, or a monomer (a-3-3) having an alkyl group and a polymerizable vinyl group is preferably used. The monomer having a hydrophilic group and a polymerizable vinyl group has pH, as measured when the monomer is dissolved in distilled water having pH of 7.0 in a ratio of 0.1 mmol/l at room temperature, of more than 5.5 but less than 8.0 (5. 5<pH<8 . 0) . The monomer (a-3) may be used singly or as a mixture of two or more kinds.

Of these monomers (a-3-1) to (a-3-3), a (meth)acrylic monomer is more preferably used.

Examples of the monomers (a-3-1) which are (meth)acrylic monomers include acrylic acid, methacrylic acid, 2-methacryloyloxyethylsuccinic acid, 2-hydroxyethyl (meth)acrylate, 2-hydroxypropyl (meth)acrylate, 4-hydroxybutyl (meth)acrylate and β-(meth)acryloyloxyethyl hydrogensuccinate.

Examples of the monomers (a-3-2) which are (meth)acrylic monomers include benzyl (meth)acrylate, phenoxyethyl (meth) acrylate, (meth) acrylic acid ethyl 2-phthalic acidmethyl ester, (meth)acrylic acid ethyl 2-phthalic acid ethyl ester, cyclohexyl (meth)acrylate, dicyclopentanyl (meth)acrylate, dicylopentanyloxyethyl (meth)acrylate, dicyclopentenyl (meth)acrylate, dicyclopentenyloxyethyl (meth)acrylate, isobornyl (meth)acrylate, t-butylcyclohexyl (meth)acrylate, cyclohexyl (meth)acrylate, (meth)acrylate morpholine, pentamethylpiperidinyl methacrylate, tetramethylpiperidinyl methacrylate, 1-adamantyl (meth)acrylate, 2-methyl-2-adamantyl (meth)acrylate, 2-ethyl-2-adamantyl (meth)acrylate, 3-hydroxy-1-adamantyl (meth)acrylate and naphthalene (meth)acrylate.

Examples of the monomers (a-3-3) which are (meth)acrylic monomers include methyl (meth)acrylate, ethyl (meth)acrylate, n-propyl (meth)acrylate, i-propyl (meth)acrylate, n-butyl (meth)acrylate, i-butyl (meth)acrylate, i-propyl (meth)acrylate, n-pentyl (meth)acrylate, i-pentyl (meth)acrylate, t-butyl (meth)acrylate, 2-ethylhexyl (meth)acrylate, isooctyl (meth)acrylate, lauryl (meth)acrylate and stearyl (meth)acrylate.

The monomer (a-3-1) which is a monomer other than the (meth)acrylic monomers and has a hydrophilic group and a polymerizable vinyl group is, for example, maleic acid (anhydride). Examples of the monomers (a-3-2) which are monomers other than the (meth) acrylic monomers and have an aromatic group or an alicycic group and a polymerizable vinyl group include styrene, dimethylstyrene, vinylnaphthalene, n-vinylcarbazole, vinyl-n-ethylcarbazole and vinylfluorene.

The polymer compound (A) for use in the present invention is obtained by polymerizing the monomer (a), and in 100% by mol of the monomer (a), the monomer (a-2) is preferably contained in an amount of not less than 30% by mol. That is to say, only the monomer (a-2) may be used as the monomer (a).

When the monomer (a-3) is used as the monomer (a) together with the monomer (a-2), it is preferable that in 100% by mol of the monomer (a), the monomer (a-2) is contained in an amount of not less than 30% by mol but less than 100% by mol, and the monomer (a-3) is contained in an amount of more than 0% by mol but not more than 70% by mol. When the monomer (a-1) is used as the monomer (a) together with the monomer (a-2), it is preferable that in 100% by mol of the monomer (a), the monomer (a-2) is contained in an amount of not less than 96% by mol but less than 100% by mol, and the monomer (a-1) is contained in an amount of more than 0% by mol but not more than 4% by mol. When the monomer (a-1) and the monomer (a-3) are used as the monomers (a) together with the monomer (a-2), it is preferable that in 100% by mol of the monomers (a), the monomer (a-2) is contained in an amount of not less than 30% by mol but less than 100% by mol, the monomer (a-1) is contained in an amount of more than 0% by mol but not more than 4% by mol, and the monomer (a-3) is contained in an amount of more than 0% by mol but not more than 66% by mol. When two or more kinds of the monomers (a-1) are used, the amount of the monomer (a-1) means the total amount of the two or more kinds of the monomers. The same shall apply to the monomer (a-2) and the monomer (a-3) . When the hydrophilic monomer (a-1) and the other monomer (a-3) are polymerized in the above amounts, if necessary, a balance between hydrophobicity and hydrophilicity can be controlled. Consequently, dispersibility of the composition of the embodiment 1 can be enhanced. Moreover, when the monomer (a-2) is polymerized in the above amount, conductivity of a film obtained from the composition of the embodiment 1 is enhanced. If the composition of the embodiment 1 is applied to a dye-sensitized solar cell and if the polymer (A) is prepared using the monomer (a-3), conversion efficiency of the solar cell is sometimes lowered. Therefore, in the preparation of the polymer compound (A), it is preferable that the amount of the monomer (a-3) used is as small as possible or the monomer (a-3) is not used.

The polymerization reaction of the monomers (a-1) to (a-3) can be carried out by a publicly known process. For example, the polymer compound (A) can be prepared by mixing these monomers, then adding a polymerization initiator and initiating polymerization by heating, light irradiation or the like.

The polymerization process to prepare the polymer compound (A) is not specifically restricted as far as the process can be performed in such a manner that a certain specific monomer is not separated from the monomer mixture. For example, solution polymerization, bulk polymerization or precipitation polymerization can be used.

The polymerization initiator used for the polymerization reaction is not specifically restricted as far as it is soluble in the above components and a solvent used in the reaction. Examples of such polymerization initiators include oil-soluble peroxide-based thermal polymerization initiators, such as benzoyl peroxide (BPO), oil-soluble azo-based thermal polymerization initiators, such as azobisisobutyronitrile (AIBN), and water-soluble azo-based thermal polymerization initiators, such as azobiscyanovaleric acid (ACVA) . When the proportion of water in the solvent is high in the solution polymerization, water-soluble peroxide-based thermal polymerization initiators, such as ammonium persulfate and potassium persulfate, and aqueous hydrogen peroxide may be used. It is also possible to use a combination with a redox agent such as ferrocene or an amine.

The polymerization initiator can be used in an amount of, for example, 0.001 to 0.1 mol based on 1 mol of the total amount of the monomers, and the polymerization initiator can be introduced at a time or dropwise or successively. In the case of the bulk polymerization or the solution polymerization using a small amount (not more than 50% by weight based on the total amount of the monomers) of a solvent, polymerization using a combination of mercaptan and metallocene (see, for example, Japanese Patent Laid-Open Publication No. 344823/2000) is also possible.

Examples of the solvents used in the polymerization reaction include alcohol-based solvents, such as methanol, ethanol, isopropyl alcohol and butanol; ketone-based solvents, such as acetone, methyl ethyl ketone and methyl isobutyl ketone; glycol-based solvents, such as methyl cellosolve, ethyl cellosolve, propylene glycol methyl ether and propylene glycol ethyl ether; and ester-based solvents, such as ethyl acetate, methyl lactate and ethyl lactate.

In the polymerization, a chain transfer agent may be used in addition to the polymerization initiator. The chain transfer agent is appropriately used for the purpose of controlling the molecular weight. The chain transfer agent employable herein is not specifically restricted provided that it can be dissolved in the above monomers and the solvent. Examples of such chain transfer agents include alkylthiols, such as dodecyl mercaptan and heptyl mercaptan; water-soluble thiols having a polar group, such as mercaptopropionic acid (BMPA) ; and oily radical inhibitors, such as α-styrene dimer (ASD).

The polymerization reaction is preferably carried out at a temperature of not higher than the boiling point of the solvent used (except the case of the bulk polymerization), and for example, the reaction is carried out at a temperature of about 65°C to 80°C. However, in the case of the bulk polymerization or the polymerization using a combination of mercaptan and metallocene (see, for example, Japanese Patent Laid-Open Publication No. 344823/2000), the reaction is preferably carried out at a temperature of 25°C to 80°C.

The polymerization product obtained as above is purified, if necessary, whereby the polymer compound (A) can be obtained. In this purification, low-molecular impurities, such as oily low-molecular impurities and residual monomers, are removed by the use of an oily poor solvent, such as hexane, and thereafter, the polymer is precipitated with an aqueous poor solvent, such as acetonitrile or methanol, to remove aqueous impurities and residues.

Preferred reasons for the purification are as follows. That is to say, if a polymerization initiator residue, a monomer, an oligomer, a heterogeneous composition, etc. remain, the function of the composition of the embodiment 1 is sometimes lowered. By virtue of such purification, the composition of the embodiment 1 is obtained without including a heterogeneous radical polymerization product, and besides, the composition can be homogeneously dispersed.

The polymer compound (A) obtained as above preferably has a weight-average molecular weight, as measured by GPC, of 3,000 to 100,000. If the weight-average molecular weight is less than 3,000, the function of the polymer compound is sometimes insufficient. On the other hand, if the weight-average molecular weight exceeds 100,000, solubility of the polymer compound itself in a solvent is sometimes deteriorated.

Examples of the carbon materials include graphite, carbon black, fullerene and carbon nanotubes. The carbon material is preferably at least one substance selected from graphite, carbon black, fullerene and carbon nanotubes. The graphite may be used singly or as a mixture of two or more kinds. The same shall apply to the carbon black, the fullerene and the carbon nanotubes . When the carbon material is blended, a polymer electrolyte layer of a dye-sensitized solar cell formed using the composition of the embodiment 1 exhibits excellent charge transfer property and electrical conductivity. Therefore, it becomes unnecessary to allow a solvent to exist in the polymer electrolyte layer, and deterioration of the dye-sensitized solar cell can be inhibited.

The carbonmaterial ispreferably added in an amount of about 0.1 to 600 parts by weight based on 100 parts by weight of the polymer compound (A).

To the composition of the embodiment (1), other compounds may be further added.

Other compounds are preferably added in an amount of about 0.1 to 600 parts by weight based on 100 parts by weight of the polymer compound (A).

When such a composition of the embodiment 1 is blended with a solvent, the composition is homogeneously dispersed in the solvent to obtain a solution.

Examples of the solvents for preparing the solution include aromatic solvents, such as benzene, toluene and xylene; ester-based solvents, such as ethyl acetate, propyl acetate, butyl acetate, methyl lactate and ethyl lactate; ketone-based solvents, such as acetone, methyl ethyl ketone, methyl isobutyl ketone, cyclohexanone and cyclopentanone; and alcohol-based solvents, such as methanol, ethanol, isopropyl alcohol, methyl cellosolve and propylene glycol monomethyl ether acetate. The above solvents may be used singly or as a mixture of two or more kinds.

The composition of the embodiment 1 is preferably used so that the composition may be dispersed in an amount of about 0.1 to 10% by mass in 100% by mass of the solution.

For the purposes of improving stability of the solution and enhancing electrical conductivity of a coating film formed from the solution, aromatic compounds having a hydroxyl group, such as benzyl alcohol, phenol, m-cresol, o-cresol, 2-naphthanol, 1-naphthanol, guaiacol and 2,6-dimethylphenol, may be added to the solution.

Such a compound is preferably added in an amount of about 50 to 500 parts by weight based on 100 parts by weight of the solution (total amount of the composition of the embodiment 1 and the solvent used).

The solution of the composition of the embodiment 1 is preferably used for forming a conductive film. More specifically, the solution is applied to an area that needs to be imparted with electrical conductivity, and the solvent is volatilized to dryness, whereby a conductive film can be simply formed. In the solution, the composition of the embodiment 1 is homogeneously dispersed, so that a smooth film can be formed, and the film has high electrical conductivity. Moreover, since the carbon material is contained in the composition of the embodiment 1, the resulting film exhibits excellent charge transfer property and electrical conductivity. Hence, a film can be formed as a solid state film without allowing a solvent to exist in the film, and therefore, deterioration of the film can be inhibited.

The solution of the composition of the embodiment 1 is preferably used also for forming an electrolyte polymer layer of a dye-sensitized solar cell. In other words, the composition of the embodiment 1 of the present invention is used as a charge transport material for a solar cell. In this case, an ionic compound is usually further added to the above solution.

Examples of the ionic compounds include lithium halide, lithium salt of Lewis acid and ammonium salt of Lewis acid. More specifically, LiI, NaI, KI, LiBF₄, LiPF₆, AlI₃, NiI₂, CuI, CoI₂ and 1-methyl-3-propylimidazolium iodide are preferably used as the ionic compounds. As the cationic species, lithium having a low molecular weight and having high mobility is particularly preferable. On the other hand, an ammonium salt of Lewis acid is also preferably used because it is sometimes superior to the lithium salt compounds in solubility.

The ionic compound is preferably added in an amount of about 0.1 to 500 parts by weight based on 100 parts by weight of the solution (total amount of the composition of the embodiment 1 and the solvent used).

As previously described, the dye-sensitized solar cell usually has a laminated structure in which a transparent substrate, a light-transmitting electrode, a metal oxide layer having a dye supported thereon, an electrolyte polymer layer, a counter electrode and a counter electrode substrate are laminated in this order (see, for example, International Publication No. 013942/2009 Pamphlet). When the solution is applied onto the metal oxide layer having a dye supported thereon and the solvent is volatilized to dryness, an electrolyte polymer layer is simply formed. In the solution, the composition of the embodiment 1 is homogeneously microdispersed, so that a smooth electrolyte polymer layer can be formed, and the electrolyte polymer layer has high electrical conductivity. Moreover, since the carbon material is contained in the composition of the embodiment 1, the resulting electrolyte polymer layer exhibits excellent charge transfer property and electrical conductivity. Thus, the electrolyte polymer layer can be formed as a solid state layer without allowing a solvent to exist in the electrolyte polymer layer, and hence, deterioration of the solar cell can be inhibited.

On the surface of such an electrolyte polymer layer as above, a counter electrode is arranged, and as this counter electrode, a platinum substrate or the like may be directly joined. Further, similarly to the light-transmitting electrode, an electrode in which platinum is deposited on a surface of a conductive metal electrode formed from a mesh of tin oxide, FTO, ITO or a conductive metal may be used, or a conductive metal electrode formed from a mesh of tin oxide, FTO, ITO or a conductive metal may be used as it is. That is to say, a barrier layer or the like is not particularly needed.

Additionally, a water dispersion product containing a water-dispersible powder having polythiophene and polyaniline and an inorganic alkali metal salt is described in National Publication of International Patent No. 514753/2004. In the case where the electrolyte polymer layer is prepared by the use of such a water dispersion product, there is a problem that water remains in the dye-sensitized solar cell to cause breakage of bonding between TiO₂ and a dye. Moreover, the water dispersion product is apparently homogeneous, but actually, the interaction between the above polythiophene and polyaniline and the above inorganic alkali metal salt is small, so that there is another problem that high conversion efficiency is not obtained in the dye-sensitized solar cell using the water dispersion product. In contrast with this, the electrolyte polymer layer obtained from the composition of the embodiment 1 exhibits superior charge transfer property and electrical conductivity, and the solar cell using this electrolyte polymer layer also has excellent conversion efficiency, as previously described.

### Composition for solid electrolyte of embodiment 2

The composition for a solid electrolyte of the embodiment 2 comprises a polymer compound (A) and a n-conjugated polymer (β). In the present specification, the "composition for a solid electrolyte of the embodiment 2" is also referred to simply as a "composition of the embodiment 2". The polymer compound (A) is obtained by polymerizing a monomer (a) comprising a monomer (a-2) having chelating ability. When such a composition of the embodiment 2 is blended with a solvent, a solution in which the composition is homogeneously dissolved or dispersed is usually formed. When the composition is blended with a solvent together with an ionic compound, aggregation hardly takes place because the interaction between the polymer (A) and an ion pair is relatively weak. That is to say, the solution obtained by the use of the composition for a solid electrolyte of the embodiment 2 has high stability.

The reason why aggregation is inhibited when the composition of the embodiment 2 and the ionic compound are together blended with the solvent is that the monomer (a-2) is used as a raw material of the polymer compound (A). This mechanism is presumed to be attributable to that the monomer (a-2) can coordinate to the ionic species (cationic species) of the ionic compound to incorporate it because the monomer (a-2) has chelating ability.

As the monomer (a) to prepare the polymer compound (A), the monomer (a-2) having chelating ability shall be used, as well as a monomer (a-1) having a sulfonic acid group or a sulfonate group. Another monomer (a-3) may be further used. In the present specification, the "monomer (a-1) having a sulfonic acid group or a sulfonate group", the "monomer (a-2) having chelating ability" and the "other monomer (a-3) " are also referred to simply as a "monomer (a-1)", a "monomer (a-2)" and a "monomer (a-3), respectively.

The monomer (a-2) having chelating ability is a monomer containing a group having chelating ability (group which can coordinate to an ion, e.g., group which can coordinate to an ion derived from an ionic compound when the composition of the embodiment 2 is blended with a solvent together with the ionic compound). More specifically, as the ion (cationic species) derived from an ionic compound, lithium ion or ammonium ion (imidazolium ion or the like) is preferably used, as described later, and the group having chelating ability can be coordinate to the cationic species in the solution. By virtue of this, a film obtained from the composition of the embodiment 2 exhibits high electrical conductivity. The monomer (a-2) may be used singly or as a mixture of two or more kinds.

The monomer (a-2) has a group having chelating ability and a polymerizable vinyl group. The group having chelating ability is a group represented by the following formula (IV) or a group represented by the following formula (V). An oxygen atom contained in the group represented by the following formula (IV) or the group represented by the following formula (V) can be readily coordinate to an ion (cationic species) derived from an ionic compound.

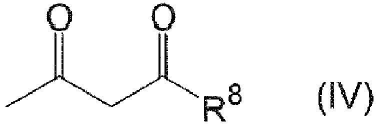

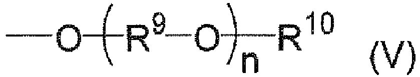

In the formula (IV), R⁸ is an alkyl group of 1 to 4 carbon atoms. Examples of the alkyl groups include methyl group, ethyl group, propyl group and butyl group. Of these, methyl group is more preferable.

In the formula (V), R⁹ is an ethylene group. R¹⁰ is an alkyl group of 1 to 4 carbon atoms. Examples of the alkyl groups include methyl group, ethyl group, propyl group and butyl group. Of these, methyl group is more preferable. n is an integer of 1 to 5.

Specific examples of such monomers (a-2) include 2-acetoacetoxyethyl (meth)acrylate, methoxyethyl (meth)acrylate, ethoxyethyl (meth)acrylate, butoxyethyl (meth)acrylate, methoxypolyethylene glycol (meth)acrylate, ethyl carbitol (meth)acrylate, methoxydiethylene glycol methacrylate, methoxytriethylene glycol (meth)acrylate.

The monomer (a-1) having a sulfonic acid group or a sulfonate group is a monomer having a sulfonic acid group or a sulfonate group and having a polymerizable vinyl group. The monomer (a-1) may be used singly or as a mixture of two or more kinds. The monomer (a-1) may have both a sulfonic acid group and a sulfonate group.

Examples of such monomers (a-1) include styrenesulfonic acid; styrenesulfonates, such as sodium styrenesulfonate, potassium styrenesulfonate and calcium styrenesulfonate; (meth)acrylic acid-ethyl-2-sulfonic acid; and (meth) acrylic acid ethyl 2-sulfonic acid salts, such as (meth) acrylic acid ethyl 2-sulfonic acid sodium salt, (meth)acrylic acid ethyl 2-sulfonic acid potassium salt and (meth) acrylic acid ethyl 2-sulfonic acid calcium salt. In the present specification, the (meth) acrylic acid means methacrylic acid or acrylic acid. Of these, sodium styrenesulfonate and (meth) acrylic acid ethyl 2-sulfonic acid sodium salt are preferable because copolymerization with other copolymerizable monomers is readily carried out.

The other monomer (a-3) is a monomer other than the monomer (a-1) and the monomer (a-2) . As the other monomer (a-3), a monomer (a-3-1) having a hydrophilic group and a polymerizable vinyl group, a monomer (a-3-2) having an aromatic group or an alicyclic group and a polymerizable vinyl group, or a monomer (a-3-3) having an alkyl group and a polymerizable vinyl group is preferably used. The monomer having a hydrophilic group and a polymerizable vinyl group has pH, as measured when the monomer is dissolved in distilled water having pH of 7.0 in a ratio of 0.1 mmol/l at room temperature, of more than 5.5 but less than 8.0 (5. 5<pH<8 . 0) . The monomer (a-3) may be used singly or as a mixture of two or more kinds.

Of these monomers (a-3-1) to (a-3-3), a (meth)acrylic monomer is more preferably used.

Examples of the monomers (a-3-1) which are (meth)acrylic monomers include acrylic acid, methacrylic acid, 2-methacryloyloxyethylsuccinic acid, 2-hydroxyethyl (meth)acrylate, 2-hydroxypropyl (meth)acrylate, 4-hydroxybutyl (meth)acrylate and β-(meth)acryloyloxyethyl hydrogensuccinate.

Examples of the monomers (a-3-2) which are (meth)acrylic monomers include benzyl (meth)acrylate, phenoxyethyl (meth) acrylate, (meth) acrylic acid ethyl 2-phthalic acidmethyl ester, (meth)acrylic acid ethyl 2-phthalic acid ethyl ester, cyclohexyl (meth)acrylate, dicyclopentanyl (meth)acrylate, dicylopentanyloxyethyl (meth)acrylate, dicyclopentenyl (meth)acrylate, dicyclopentenyloxyethyl (meth)acrylate, isobornyl (meth)acrylate, t-butylcyclohexyl (meth)acrylate, cyclohexyl (meth)acrylate, (meth)acrylate morpholine, pentamethylpiperidinyl methacrylate, tetramethylpiperidinyl methacrylate, 1-adamantyl (meth)acrylate, 2-methyl-2-adamantyl (meth)acrylate, 2-ethyl-2-adamantyl (meth)acrylate, 3-hydroxy-1-adamantyl (meth)acrylate and naphthalene (meth)acrylate.

Examples of the monomers (a-3-3) which are (meth)acrylic monomers include methyl (meth)acrylate, ethyl (meth)acrylate, n-propyl (meth)acrylate, i-propyl (meth)acrylate, n-butyl (meth)acrylate, i-butyl (meth)acrylate, i-propyl (meth)acrylate, n-pentyl (meth)acrylate, i-pentyl (meth)acrylate, t-butyl (meth)acrylate, 2-ethylhexyl (meth)acrylate, isooctyl (meth)acrylate, lauryl (meth)acrylate and stearyl (meth)acrylate.

The monomer (a-3-1) which is a monomer other than the (meth)acrylic monomers and has a hydrophilic group and a polymerizable vinyl group is, for example, maleic acid (anhydride). Examples of the monomers (a-3-2) which are monomers other than the (meth) acrylic monomers and have an aromatic group or an alicycic group and a polymerizable vinyl group include styrene, dimethylstyrene, vinylnaphthalene, n-vinylcarbazole, vinyl-n-ethylcarbazole and vinylfluorene.

The polymer compound (A) for use in the present invention is obtained by polymerizing the monomer (a), and in 100% by mol of the monomer (a), the monomer (a-2) is preferably contained in an amount of not less than 30% by mol. That is to say, only the monomer (a-2) may be used as the monomer (a).

When the monomer (a-3) is used as the monomer (a) together with the monomer (a-2), it is preferable that in 100% by mol of the monomer (a), the monomer (a-2) is contained in an amount of not less than 30% by mol but less than 100% by mol, and the monomer (a-3) is contained in an amount of more than 0% by mol but not more than 70% by mol. When the monomer (a-1) is used as the monomer (a) together with the monomer (a-2), it is preferable that in 100% by mol of the monomer (a), the monomer (a-2) is contained in an amount of not less than 96% by mol but less than 100% by mol, and the monomer (a-1) is contained in an amount of more than 0% by mol but not more than 4% by mol. When the monomer (a-1) and the monomer (a-3) are used as the monomers (a) together with the monomer (a-2), it is preferable that in 100% by mol of the monomers (a), the monomer (a-2) is contained in an amount of not less than 30% by mol but less than 100% by mol, the monomer (a-1) is contained in an amount of more than 0% by mol but not more than 4% by mol, and the monomer (a-3) is contained in an amount of more than 0% by mol but not more than 66% by mol. When two or more kinds of the monomers (a-1) are used, the amount of the monomer (a-1) means the total amount of the two or more kinds of the monomers. The same shall apply to the monomer (a-2) and the monomer (a-3) . When the hydrophilic monomer (a-1) and the other monomer (a-3) are polymerized in the above amounts, if necessary, a balance between hydrophobicity and hydrophilicity can be controlled. Consequently, dispersibility of the composition of the embodiment 2 can be enhanced. Moreover, when the monomer (a-2) is polymerized in the above amount, conductivity of a film obtained from the composition of the embodiment 2 is enhanced.

The polymerization reaction of the monomers (a-1) to (a-3) can be carried out by a publicly known process. For example, the polymer compound (A) can be prepared by mixing these monomers, then adding a polymerization initiator and initiating polymerization by heating, light irradiation or the like.

The polymerization process to prepare the polymer compound (A) is not specifically restricted as far as the process can be performed in such a manner that a certain specific monomer is not separated from the monomer mixture. For example, solution polymerization, bulk polymerization or precipitation polymerization can be used.

The polymerization initiator used for the polymerization reaction is not specifically restricted as far as it is soluble in the above components and a solvent used in the reaction. Examples of such polymerization initiators include oil-soluble peroxide-based thermal polymerization initiators, such as benzoyl peroxide (BPO), oil-soluble azo-based thermal polymerization initiators, such as azobisisobutyronitrile (AIBN), and water-soluble azo-based thermal polymerization initiators, such as azobiscyanovaleric acid (ACVA) . When the proportion of water in the solvent is high in the solution polymerization, water-soluble peroxide-based thermal polymerization initiators, such as ammonium persulfate and potassium persulfate, and aqueous hydrogen peroxide may be used. It is also possible to use a combination with a redox agent such as ferrocene or an amine.

The polymerization initiator can be used in an amount of, for example, 0.001 to 0.1 mol based on 1 mol of the total amount of the monomers, and the polymerization initiator can be introduced at a time, dropwise or successively. In the case of the bulk polymerization or the solution polymerization using a small amount (not more than 50% by weight based on the total amount of the monomers) of a solvent, polymerization using a combination of mercaptan and metallocene (see, for example, Japanese Patent Laid-Open Publication No. 344823/2000) is also possible.

Examples of the solvents used in the polymerization reaction include alcohol-based solvents, such as methanol, ethanol, isopropyl alcohol and butanol; ketone-based solvents, such as acetone, methyl ethyl ketone and methyl isobutyl ketone; glycol-based solvents, such as methyl cellosolve, ethyl cellosolve, propylene glycol methyl ether and propylene glycol ethyl ether; and ester-based solvents, such as ethyl acetate, methyl lactate and ethyl lactate.

In the polymerization, a chain transfer agent may be used in addition to the polymerization initiator. The chain transfer agent is appropriately used for the purpose of controlling the molecular weight. The chain transfer agent employable herein is not specifically restricted provided that it can be dissolved in the above monomers and the solvent. Examples of such chain transfer agents include alkylthiols, such as dodecyl mercaptan and heptyl mercaptan; water-soluble thiols having a polar group, such as mercaptopropionic acid (BMPA) ; and oily radical inhibitors, such as α-styrene dimer (ASD).

The polymerization reaction is preferably carried out at a temperature of not higher than the boiling point of the solvent used (except the case of bulk polymerization), and for example, the reaction is carriedout at a temperature of about 65°C to 80°C. However, in the case of the bulk polymerization or the polymerization using a combination of mercaptan and metallocene (see, for example, Japanese Patent Laid-Open Publication No. 344823/2000), the reaction is preferably carried out at a temperature of 25°C to 80°C.

The polymerization product obtained as above is purified, if necessary, whereby the polymer compound (A) can be obtained. In this purification, low-molecular impurities, such as oily low-molecular impurities and residual monomers, are removed by the use of an oily poor solvent, such as hexane, and thereafter, the polymer is precipitated with an aqueous poor solvent, such as acetonitrile or methanol, to remove aqueous impurities and residues.

Preferred reasons for the purification are as follows. That is to say, if a polymerization initiator residue, a monomer, an oligomer, a heterogeneous composition, etc. remain, the function of the composition of the embodiment 2 is sometimes lowered. By virtue of such purification, the composition of the embodiment 2 is obtained without including a heterogeneous radical polymerization product, and besides, the composition can be homogeneously dispersed.

The polymer compound (A) obtained as above preferably has a weight-average molecular weight, as measured by GPC, of 3,000 to 100,000. If the weight-average molecular weight is less than 3,000, the function of the polymer compound is sometimes insufficient. On the other hand, if the weight-average molecular weight exceeds 100,000, solubility of the polymer compound itself in a solvent is sometimes deteriorated.

The n-conjugated polymer (β) is usually prepared by adding at least one monomer selected from monomers represented by the following formulas (I) to (III) to an electrolytic solvent and oxidizing it with an oxidizing agent. In the present specification, the "monomers represented by the formulas (I) to (III)" are also referred to as "monomers (I) to (III)", respectively.

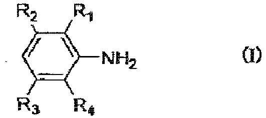

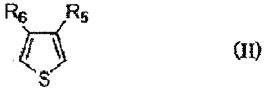

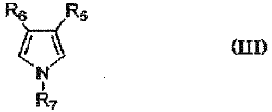

In the formula (I), R₁ to R₄ are each independently a hydrogen atom, an alkyl group of 1 to 12 carbon atoms or an alkoxy group of 1 to 10 carbon atoms. Examples of the alkyl groups include methyl group, ethyl group, propyl group and butyl group. From the viewpoint of solvent solubility, a longer alkyl group can give better solubility in a hydrophobic solvent, but from the viewpoint of conductivity of the conductive polymer, a hydrogen atom is preferable. Examples of the alkoxy groups include methoxy group, ethoxy group, propoxy group and butoxy group. Although a longer alkoxy group among them gives better solubility in a polar solvent, a hydrogen atom is preferable for the same reason as above.

The monomer represented by the formula (I) is specifically a monomer (I-1) wherein at least one of R₁ to R₄ is an alkoxy group of 1 to 10 carbon atoms, and R₁ to R₄ other than the alkoxy group are each a hydrogen atom or an alkyl group of 1 to 10 carbon atoms, or a monomer (1-2) wherein R₁ to R₄ are each a hydrogen atom or an alkyl group of 1 to 12 carbon atoms.

More specific examples of the monomers (I-1) include o-anisidine, p-anisidine, m-anisidine, methoxyaniline and butoxyaniline. More specific examples of the monomers (1-2) include aniline, o-toluidine, m-toluidine, 3,5-dimethylaniline, 2,3-dimethylaniline, 2,5-dimethylaniline, 2,6-dimethylaniline, 2-ethylaniline, 3-ethylaniline, 2-isopropylaniline, 3-isopropylaniline, 2-methyl-6-ethylaniline, 2-n-propylaniline, 2-methyl-5-isopropylaniline, 2-butylaniline, 3-butylaniline, 5,6,7,8-tetrahydro-1-naphthylamine and 2,6-diethylaniline.

In the formula (II), R₅ to R₆ are each independently a hydrogen atom, an alkyl group of 1 to 12 carbon atoms or an alkoxy group of 1 to 10 carbon atoms. Examples of the alkyl groups and the alkoxy groups, preferred ranges thereof and the reasons are the same as those described for R₁ in the formula (I). R₅ and R₆ may be bonded to each other to form an alkylenedioxy group of 1 to 8 carbon atoms. Examples of the alkylenedioxy groups include ethylenedioxy group and propylenedioxy group. Of these, ethylenedioxy group is preferable.

The monomer represented by the formula (II) is specifically a monomer (II-1) wherein at least one of R₅ to R₆ is an alkoxy group of 1 to 10 carbon atoms, R₅ to R₆ other than the alkoxy group are each a hydrogen atom or an alkyl group of 1 to 10 carbon atoms, and R₅ and R₆ may be bonded to each other to form an alkylenedioxy group of 1 to 8 carbon atoms, or a monomer (II-2) wherein R₅ to R₆ are each a hydrogen atom or an alkyl group of 1 to 12 carbon atoms.

More specific examples of the monomers (II-1) include 3-methoxythiophene, 3,4-ethylenedioxythiophene, 3,4-propylenedioxythiophene, 3,4-dimethoxythiophene, 3,4-(2',2'-dimethylpropylene)dioxythiophene and 3,4-(2',2'-diethylpropylene)dioxythiophene. More specific examples of the monomers (II-2) include thiophene, 3-methylthiophene, 3-ethylthiophene, 3-propylthiophene, 3-butylthiophene, 3-pentylthiophene, 3-hexylthiophene, 3-heptylthiophene and 3-n-octylthiophene.

In the formula (III), R₅ to R₆ are each independently a hydrogen atom, an alkyl group of 1 to 12 carbon atoms or an alkoxy group of 1 to 10 carbon atoms. Examples of the alkyl groups and the alkoxy groups, preferred ranges thereof and the reasons are the same as those described for R₁ in the formula (I). R₅ and R₆ may be bonded to each other to form an alkylenedioxy group of 1 to 8 carbon atoms. Examples of the alkylenedioxy groups and preferred ranges thereof are the same as those described for R₅ in the formula (II). R₇ is a hydrogen atom, an alkyl group of 1 to 12 carbon atoms or an aromatic group. Examples of the alkyl groups include methyl group, ethyl group, propyl group and butyl group. Of these, a hydrogen atom is preferable.

The monomer represented by the formula (III) is specifically a monomer (III-1) wherein at least one of R₅ to R₆ is an alkoxy group of 1 o 10 carbon atoms, R₅ to R₆ other than the alkoxy group are each a hydrogen atom or an alkyl group of 1 to 10 carbon atoms, R₇ is a hydrogen atom, an alkyl group of 1 to 6 carbon atoms or an aromatic group, and R₅ and R₆ may be bonded to each other to form an alkylenedioxy group of 1 to 8 carbon atoms, or a monomer (III-2) wherein R₅ to R₆ are each a hydrogen atom or an alkyl group of 1 to 12 carbon atoms, and R₇ is a hydrogen atom or an alkyl group of 1 to 12 carbon atoms.

More specific examples of the monomers (III-1) include 3,4-ethylenedioxypyrrole and 3,4-propylenedioxypyrrole. More specific examples of the monomers (III-2) include pyrrole, 3-methylpyrrole, 3-heptylpyrrole and 3-n-octylpyrrole.

The monomers (I) to (III) may be used by mixing them, or the monomers (I) to (III) may be each used singly or as a mixture of two or more kinds.

For dissolving the n-conjugated polymer (β) in the solvent, the monomers (I) to (III) are appropriately selected.

In the preparation of the n-conjugated polymer (β), for example, the electrolytic solvent such as ion-exchanged water is acidified first, when needed, and to this, an emulsifying agent such as p-toluenesufonic acid is added. Subsequently, to the mixture, the monomers (I) to (III) are added, and an oxidizing agent is further added to perform oxidation polymerization.

Examples of acidic components used for acidifying the electrolytic solvent in the above reaction include hydrochloric acid, sulfuric acid, perchloric acid, periodic acid, iron(III) chloride and iron(III) sulfate. The amount of the acidic component is in the range of about 0.5 to 4.0 ml based on 1 mol of the total amount of the monomers (I) to (III) used.

The oxidizing agent used for the reaction needs to be appropriately selected according to the redox potential of the aromatic compound (monomer) for forming the π-conjugated polymer (β), but examples of the oxidizing agents include ammonium peroxodisulfate, potassium peroxodisulfate, sodium peroxodisulfate, iron(III) chloride, iron(III) sulfate, iron(III) tetrafluoroborate, iron(III) hexafluorophosphate, copper(II) sulfate, copper(II) chloride, copper(II) tetrafluoroborate and copper(II) hexafluorophosphate.

The oxidizing agent is usually used in an amount of about 1.0 to 3.0 mol (in terms of monovalent oxidizing agent) based on 1 mol of the total amount of the monomers (I) to (III) . However, even if the amount of the oxidizing agent is not more than 1 mol based on 1 mol of the total amount of the monomers (I) to (III), polymerization can be sufficiently carried out depending upon the degree of oxidation (degree of acidity) in the system.

The temperature of the polymerization reaction for obtaining the n-conjugatedpolymer (β) is appropriately determined according to the types of the monomers (I) to (III) because the heating value after the oxidation reaction and ease of abstraction of hydrogen vary depending upon the types of the monomers (I) to (III) . In general, when the monomer (I) is used, the temperature of the polymerization reaction is preferably not higher than 40°C, and when the monomer (II) is used, the temperature is preferably not higher than 90°C, and when the monomer (III) is used, the temperature is preferably not higher than 20°C.

When the molecular weight of the n-conjugated polymer (β) is intended to be increased, the reaction temperature is made relatively lower and the reaction time is made relatively longer. When the molecular weight thereof is decreased, they are reversed.

The polymerization product obtained as above is subjected to washing, if necessary, whereby the n-conjugated polymer (β) that is a desired product can be obtained.

The n-conjugated polymer (β) usually has a number-average molecular weight, as measured by GPC, of 1,000 to 300,000.

The n-conjugated polymer (β) is preferably added in an amount of about 0.1 to 600 parts by weight based on 100 parts by weight of the polymer compound (A).

To the composition of the embodiment (2), other compounds may be further added.

Other compounds are preferably added in an amount of about 0.1 to 600 parts by weight based on 100 parts by weight of the polymer compound (A).

When such a composition of the embodiment 2 is blended with a solvent, the composition is homogeneously dissolved or dispersed in the solvent to obtain a solution.

Examples of the solvents for preparing the solution include aromatic solvents, such as benzene, toluene and xylene; ester-based solvents, such as ethyl acetate, propyl acetate, butyl acetate, methyl lactate and ethyl lactate; ketone-based solvents, such as acetone, methyl ethyl ketone, methyl isobutyl ketone, cyclohexanone and cyclopentanone; and alcohol-based solvents, such as methanol, ethanol, isopropyl alcohol, methyl cellosolve and propylene glycol monomethyl ether acetate. The above solvents may be used singly or as a mixture of two or more kinds.

The composition of the embodiment 2 is preferably used so that the composition may be dissolved or dispersed in an amount of about 0.1 to 10% by mass in 100% by mass of the solution.

For the purposes of improving stability of the solution and enhancing electrical conductivity of a coating film formed from the solution, aromatic compounds having a hydroxyl group, such as benzyl alcohol, phenol, m-cresol, o-cresol, 2-naphthanol, 1-naphthanol, guaiacol and 2,6-dimethylphenol, may be added to the solution.

Such a compound is preferably added in an amount of about 50 to 500 parts by weight based on 100 parts by weight of the solution (total amount of the composition of the embodiment 2 and the solvent used).

The solution of the composition of the embodiment 2 is preferably used for forming a conductive film. More specifically, the solution is applied to an area that needs to be imparted with electrical conductivity, and the solvent is volatilized to dryness, whereby a conductive film can be simply formed. In the solution, the composition of the embodiment 2 is homogeneously dissolved or dispersed, so that a smooth film can be formed, and the film has high electrical conductivity. Moreover, since the n-conjugated polymer is contained in the composition of the embodiment 2, the resulting film exhibits excellent charge transfer property and electrical conductivity. Hence, a film canbe formed as a solid state film without allowing a solvent to exist in the film, and therefore, deterioration of the film can be inhibited.

The solution of the composition of the embodiment 2 is preferably used also for forming an electrolyte polymer layer of a dye-sensitized solar cell. In other words, the composition of the embodiment 2 of the present invention is used as a charge transport material for a solar cell. In this case, an ionic compound is usually further added to the above solution.

Examples of the ionic compounds include lithium halide, lithium salt of Lewis acid and ammonium salt of Lewis acid. More specifically, LiI, NaI, KI, LiBF₄, LiPF₆, AlI₃, NiI₂, CuI, CoI₂, 1-methyl-3-propylimidazolium iodide and 1,2-dimethyl-3-propylimidazolium iodide are preferably used as the ionic compounds. As the cationic species, lithium having a low molecular weight and having high mobility is particularly preferable. On the other hand, an ammonium salt of Lewis acid is also preferably used because it is sometimes superior to the lithium salt compounds in solubility.

The ionic compound is preferably added in an amount of about 0.1 to 500 parts by weight based on 100 parts by weight of the solution (total amount of the composition of the embodiment 2 and the solvent used).

The polymer compound (A) is a compound obtained by polymerizing the monomer (a-2), as described above, and hence, even if the composition of the embodiment 2 is blended with the solvent together with the ionic compound, aggregation of the π-conjugated polymer (β) can be inhibited. Thus, by the use of the composition of the embodiment 2, a solution having high stability can be formed. When the ionic compound is added, the composition of the embodiment 2 is homogeneously dissolved, but it is sometimes homogeneously microdispersed in the solvent. However, even if the composition is microdispersed, there is no problem in the preparation of the later-described electrolyte polymer layer.

As previously described, the dye-sensitized solar cell has a laminated structure in which a transparent substrate, a light-transmitting electrode, a metal oxide layer having a dye supported thereon, an electrolyte polymer layer, a counter electrode and a counter electrode substrate are laminated in this order (see, for example, International Publication No. 013942/2009 Pamphlet). When the solution is applied onto the metal oxide layer having a dye supported thereon and the solvent is volatilized to dryness, an electrolyte polymer layer is simply formed. In the solution, the composition of the embodiment 2 is homogeneously dissolved or homogeneously microdispersed, so that a smooth electrolyte polymer layer can be formed, and the electrolyte polymer layer has high electrical conductivity. Moreover, since the n-conjugated polymer is contained in the composition of the embodiment 2, the resulting electrolyte polymer layer exhibits excellent charge transfer property and electrical conductivity. Thus, the electrolyte polymer layer can be formed as a solid state layer without allowing a solvent to exist in the electrolyte polymer layer, and hence, deterioration of the solar cell can be inhibited.

On the surface of such an electrolyte polymer layer as above, a counter electrode is arranged, and as this counter electrode, a platinum substrate or the like may be directly joined. Further, similarly to the light-transmitting electrode, an electrode in which platinum is deposited on a surface of a conductive metal electrode formed from a mesh of tin oxide, FTO, ITO or a conductive metal may be used, or a conductive metal electrode formed from a mesh of tin oxide, FTO, ITO or a conductive metal may be used as it is. That is to say, a barrier layer or the like is not particularly needed.

Additionally, a water dispersion product containing a water-dispersible powder having polythiophene and polyaniline and an inorganic alkali metal salt is described in National Publication of International Patent No. 514753/2004. In the case where the electrolyte polymer layer is prepared by the use of such a water dispersion product, there is a problem that water remains in the dye-sensitized solar cell to cause breakage of bonding between TiO₂ and a dye. Moreover, the water dispersion product is apparently homogeneous, but actually, the interaction between the above polythiophene and polyaniline and the above inorganic alkali metal salt is small, so that there is another problem that high conversion efficiency is not obtained in the dye-sensitized solar cell using the water dispersion product. In contrast with this, the electrolyte polymer layer obtained from the composition of the embodiment 2 exhibits superior charge transfer property and electrical conductivity, and the solar cell using this electrolyte polymer layer also has excellent conversion efficiency, as previously described.

### Composition for solid electrolyte of embodiment 3

The composition of the embodiment 3 comprises a polymer compound (A) and a n-conjugated polymer (β). In other words, the composition of the embodiment (3) is a composition obtained by doping the π-conjugated polymer (β) with the polymer compound (A). In the present specification, the "composition obtained by doping the n-conjugated polymer (β) with the polymer compound (A)" is also referred to simply as a "n-conjugated polymer (β) doped with a polymer compound (A)" or a "doped n-conjugated polymer (β)".

The π-conjugated polymer (β) doped with a polymer compound (A) as a dopant is prepared by polymerizing at least one monomer selected from monomers represented by the following formulas (I) to (III) in the presence of a polymer compound (A) and an oxidizing agent in an electrolytic solvent to form a n-conjugated polymer (β) and to simultaneously dope the π-conjugated polymer (β) with the polymer compound (A).

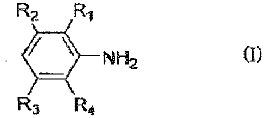

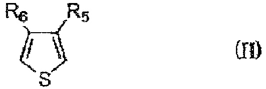

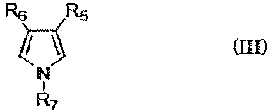

The polymer compound (A) is a polymer compound obtained by polymerizing a monomer (a-1) having a sulfonic acid group or a sulfonate group, a monomer (a-2) having chelating ability, and if necessary, other monomer (a-3), as described later. In the present specification, the "monomer (a-1) having a sulfonic acid group or a sulfonate group", the "monomer (a-2) having chelating ability" and the "other monomer (a-3)" are also referred to simply as a "monomer (a-1)", a "monomer (a-2)" and a "monomer (a-3)", respectively.

When the polymer compound (A) is allowed to exist in the preparation of the π-conjugated polymer (β), the polymer compound (A) becomes incorporated as a dopant into the n-conjugated polymer (β), and hence, the resulting doped n-conjugated polymer (β) has high conductivity.

Moreover, stacking of the formed π-conjugated polymer (β) is lowered because of the steric hindrance of the polymer compound (A), and hence, the finally obtained doped π-conjugated polymer (β) has high solubility (solubility due to heat or solvent) . The polymer compound (A) is a compound obtained by polymerizing the monomer (a-1) and if necessary the monomer (a-3), and hence, the property concerning hydrophobicity or hydrophilicity has been already controlled. This also contributes to excellent solubility of the doped π-conjugated polymer (β).

Furthermore, the polymer compound (A) is a compound obtained by polymerizing the monomer (a-2), and hence, even if the finally obtained doped π-conjugated polymer (β) is blended with a solvent together with an ionic compound, aggregation of the n-conjugated polymer (β) is inhibited. This mechanism is presumed to be attributable to that the monomer (a-2) can coordinate to the ionic species (cationic species) of the ionic compound to incorporate it because the monomer (a-2) has chelating ability.

In the doped π-conjugated polymer (β), high electrical conductivity and high solubility (solubility due to heat or solvent) are reconciled with each other, as described above. Moreover, the solution obtained from the π-conjugated polymer (β) has high stability.

The polymer compound (A) that is allowed to exist when the n-conjugated polymer (β) is prepared also exerts a function to form a homogeneous polymerization field as an emulsifying agent.

The polymer compound (A) for use in the present invention is a polymer compound obtained by polymerizing the monomer (a-1) having a sulfonic acid group or a sulfonate group and the monomer (a-2) having chelating ability in a specific ratio or a polymer compound obtained by polymerizing the monomer (a-1) having a sulfonic acid group or a sulfonate group, the monomer (a-2) having chelating ability and other monomer (a-3) in a specific ratio.

The monomer (a-1) having a sulfonic acid group or a sulfonate group is a monomer having a sulfonic acid group or a sulfonate group and having a polymerizable vinyl group. The monomer (a-1) may be used singly or as a mixture of two or more kinds. The monomer (a-1) may have both a sulfonic acid group and a sulfonate group.

Examples of such monomers (a-1) include styrenesulfonic acid; styrenesulfonates, such as sodium styrenesulfonate, potassium styrenesulfonate and calcium styrenesulfonate; (meth)acrylic acid-ethyl-2-sulfonic acid; and (meth) acrylic acid ethyl 2-sulfonic acid salts, such as (meth) acrylic acid ethyl 2-sulfonic acid sodium salt, (meth)acrylic acid ethyl 2-sulfonic acid potassium salt and (meth)acrylic acidethyl 2-sulfonic acid calcium salt. In the present specification, the (meth) acrylic acid means methacrylic acid or acrylic acid. Of these, sodium styrenesulfonate and (meth) acrylic acid ethyl 2-sulfonic acid sodium salt are preferable because copolymerization with other copolymerizable monomers is readily carried out and washing after preparation of the conductive polymer is readily made.

The monomer (a-2) having chelating ability is a monomer containing a group having chelating ability (group which can coordinate to an ion, e.g., group which can coordinate to an ion derived from an ionic compound when the finally obtained doped n-conjugated polymer (β) is blended with a solvent together with the ionic compound) . More specifically, as the ion (cationic species) derived from an ionic compound, lithium ion or ammonium ion (imidazolium ion or the like) is preferably used, as described later, and the group having chelating ability can coordinate to the cationic species in the solution. By virtue of this, in the solution containing the doped π-conjugated polymer (β) and the ionic compound, precipitation due to aggregation of the n-conjugated polymer (β) can be inhibited. The monomer (a-2) may be used singly or as a mixture of two or more kinds.

The monomer (a-2) has a group having chelating ability and a polymerizable vinyl group. The group having chelating ability is a group represented by the following formula (IV) or a group represented by the following formula (V). An oxygen atom contained in the group represented by the following formula (IV) or the group represented by the following formula (V) can readily coordinate to an ion (cationic species) derived from an ionic compound.

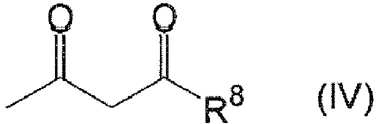

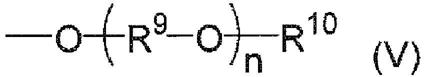

In the formula (IV), R⁸ is an alkyl group of 1 to 4 carbon atoms. Examples of the alkyl groups include methyl group, ethyl group, propyl group and butyl group. Of these, methyl group is more preferable from the viewpoint of impartation of water solubility as an emulsifying agent.

In the formula (V), R⁹ is an ethylene group. R¹⁰ is an alkyl group of 1 to 4 carbon atoms. Examples of the alkyl groups include methyl group, ethyl group, propyl group and butyl group. Of these, methyl group is more preferable from the viewpoint of impartation of water solubility as an emulsifying agent. n is an integer of 1 to 5.

Specific examples of such monomers (a-2) include 2-acetoacetoxyethyl (meth)acrylate, methoxyethyl (meth)acrylate, ethoxyethyl (meth)acrylate, butoxyethyl (meth)acrylate, methoxypolyethylene glycol (meth)acrylate, ethyl carbitol (meth)acrylate, methoxydiethylene glycol methacrylate, methoxytriethylene glycol (meth)acrylate.

The other monomer (a-3) is a monomer other than the monomer (a-1) and the monomer (a-2) . As the other monomer (a-3), a monomer (a-3-1) having a hydrophilic group and a polymerizable vinyl group, a monomer (a-3-2) having an aromatic group or an alicyclic group and a polymerizable vinyl group, or a monomer (a-3-3) having an alkyl group and a polymerizable vinyl group is preferably used. The monomer having a hydrophilic group and a polymerizable vinyl group has pH, as measured when the monomer is dissolved in distilled water having pH of 7.0 in a ratio of 0.1 mmol/l at room temperature, of more than 5.5 but less than 8.0 (5.5<pH<8.0). The monomer (a-3) may be used singly or as a mixture of two or more kinds.

Of these monomers (a-3-1) to (a-3-3), a (meth)acrylic monomer is more preferably used.

Examples of the monomers (a-3-1) which are (meth)acrylic monomers include acrylic acid, methacrylic acid, 2-methacryloyloxyethylsuccinic acid, 2-hydroxyethyl (meth)acrylate, 2-hydroxypropyl (meth)acrylate, 4-hydroxybutyl (meth)acrylate and β-(meth)acryloyloxyethyl hydrogensuccinate.

Examples of the monomers (a-3-2) which are (meth)acrylic monomers include benzyl(meth)acrylate, phenoxyethyl (meth) acrylate, (meth) acrylic acid ethyl 2-phthalic acidmethyl ester, (meth)acrylic acid ethyl 2-phthalic acid ethyl ester, cyclohexyl (meth)acrylate, dicyclopentanyl(meth)acrylate, dicylopentanyloxyethyl (meth)acrylate, dicyclopentenyl (meth)acrylate, dicyclopentenyloxyethyl (meth)acrylate, isobornyl (meth)acrylate, t-butylcyclohexyl (meth)acrylate, cyclohexyl (meth)acrylate, (meth)acrylate morpholine, pentamethylpiperidinyl methacrylate, tetramethylpiperidinyl methacrylate, 1-adamantyl (meth)acrylate, 2-methyl-2-adamantyl (meth)acrylate, 2-ethyl-2-adamantyl (meth)acrylate, 3-hydroxy-1-adamantyl (meth)acrylate and naphthalene (meth)acrylate.

Examples of the monomers (a-3-3) which are (meth)acrylic monomers include methyl (meth)acrylate, ethyl (meth)acrylate, n-propyl (meth)acrylate, i-propyl (meth)acrylate, n-butyl (meth)acrylate, i-butyl (meth)acrylate, i-propyl (meth)acrylate, n-pentyl (meth)acrylate, i-pentyl (meth)acrylate, t-butyl (meth)acrylate, 2-ethylhexyl (meth)acrylate, isooctyl (meth)acrylate, lauryl (meth)acrylate and stearyl (meth)acrylate.

The monomer (a-3-1) which is a monomer other than the (meth)acrylic monomers and has a hydrophilic group and a polymerizable vinyl group is, for example, maleic acid (anhydride). Examples of the monomers (a-3-2) which are monomers other than the (meth) acrylic monomers and have an aromatic group or an alicycic group and a polymerizable vinyl group include styrene, dimethylstyrene, vinylnaphthalene, n-vinylcarbazole, vinyl-n-ethylcarbazole and vinylfluorene.

The polymer compound (A) for use in the present invention is obtained by polymerizing the monomer (a-1) in an amount of 10 to 50% by mol, more preferably 10 to 40% by mol, still more preferably 15 to 35% by mol, the monomer (a-2) in an amount of 10 to 90% by mol, more preferably 10 to 80% by mol, still more preferably 15 to 70% by mol, and the monomer (a-3) in an amount of 0 to 70% by mol, more preferably 0 to 70% by mol, still more preferably 15 to 70% by mol. The total amount of the monomers (a-1) to (a-3) is 100% by mol. When two or more kinds of the monomers (a-1) are used, the amount of the monomer (a-1) means the total amount of the two or more kinds of the monomers. The same shall apply to the monomer (a-2) and the monomer (a-3). When the hydrophilic monomer (a-1) and if necessary the other monomer (a-3) are polymerized in the above amounts, a balance between hydrophobicity and hydrophilicity can be controlled. Consequently, this further contributes to the enhancement of solubility of the finally obtained doped n-conjugated polymer (β). Moreover, when the monomer (a-2) is polymerized in the above amount, aggregation of the finally obtained doped n-conjugated polymer (β) can be inhibited even if the doped π-conjugated polymer (β) is blended with a solvent together with an ionic compound. That is to say, a solution having high stability can be prepared.

The polymerization reaction of the monomers (a-1) to (a-3) can be carried out by a publicly known process. For example, the polymer compound (A) can be prepared by mixing these monomers, then adding a polymerization initiator and initiating polymerization by heating, light irradiation or the like.

The polymerization process to prepare the polymer compound (A) is not specifically restricted as far as the process can be performed in such a manner that a certain specific monomer is not separated from the monomer mixture. For example, solution polymerization, bulk polymerization or precipitation polymerization can be used.

The polymerization initiator used for the polymerization reaction is not specifically restricted as far as it is soluble in the above components and a solvent used in the reaction. Examples of such polymerization initiators include oil-soluble peroxide-based thermal polymerization initiators, such as benzoyl peroxide (BPO), oil-soluble azo-based thermal polymerization initiators, such as azobisisobutyronitrile (AIBN), and water-soluble azo-based thermal polymerization initiators, such as azobiscyanovaleric acid (ACVA) . When the proportion of water in the solvent is high in the solution polymerization, water-soluble peroxide-based thermal polymerization initiators, such as ammonium persulfate and potassium persulfate, and aqueous hydrogen peroxide may be used. It is also possible to use a combination with a redox agent such as ferrocene or an amine.

The polymerization initiator can be used in an amount of, for example, 0.001 to 0.1 mol based on 1 mol of the total amount of the monomers, and the polymerization initiator can be introduced at a time, dropwise or successively. In the case of the bulk polymerization or the solution polymerization using a small amount (not more than 50% by weight based on the total amount of the monomers) of a solvent, polymerization using a combination of mercaptan and metallocene (see, for example, Japanese Patent Laid-Open Publication No. 344823/2000) is also possible.

Examples of the solvents used in the polymerization reaction include alcohol-based solvents, such as methanol, ethanol, isopropyl alcohol and butanol; ketone-based solvents, such as acetone, methyl ethyl ketone and methyl isobutyl ketone; glycol-based solvents, such as methyl cellosolve, ethyl cellosolve, propylene glycol methyl ether and propylene glycol ethyl ether; and ester-based solvents, such as ethyl acetate, methyl lactate and ethyl lactate.

In the polymerization, a chain transfer agent may be used in addition to the polymerization initiator. The chain transfer agent is appropriately used for the purpose of controlling the molecular weight. The chain transfer agent employable herein is not specifically restricted provided that it can be dissolved in the above monomers and the solvent. Examples of such chain transfer agents include alkylthiols, such as dodecyl mercaptan and heptyl mercaptan; water-soluble thiols having a polar group, such as mercaptopropionic acid (BMPA) ; and oily radical inhibitors, such as α-styrene dimer (ASD).

The polymerization reaction is preferably carried out at a temperature of not higher than the boiling point of the solvent used (except the case of bulk polymerization), and for example, the reaction is carried out at a temperature of about 65°C to 80°C. However, in the case of the bulk polymerization or the polymerization using a combination of mercaptan and metallocene (see, for example, Japanese Patent Laid-Open Publication No. 344823/2000), the reaction is preferably carried out at a temperature of 25°C to 80°C.

The polymerization product obtained as above is purified, if necessary, whereby the polymer compound (A) can be obtained. In this purification, low-molecular impurities, such as oily low-molecular impurities and residual monomers, are removed by the use of an oily poor solvent, such as hexane, and thereafter, the polymer is precipitated with an aqueous poor solvent, such as acetonitrile or methanol, to remove aqueous impurities and residues.

Preferred reasons for the purification are as follows. That is to say, the polymer compound (A) is introduced as a dopant into the π-conjugated polymer (β), and it acts as a stack inhibitor and as a solvent solubilizing agent. However, if a polymerization initiator residue, a monomer, an oligomer, a heterogeneous composition, etc. remain, the function of the finally obtained doped π-conjugated polymer (β) is sometimes lowered. By virtue of such purification, a homogeneous doped n-conjugated polymer (β) is obtained without including a heterogeneous radical polymerization product, and besides, a dissolved state in a solvent can be exhibited.

The polymer compound (A) obtained as above preferably has a weight-average molecular weight, as measured by GPC, of 3,000 to 100,000. If the weight-average molecular weight is less than 3,000, the function of the polymer compound is sometimes insufficient. On the other hand, if the weight-average molecular weight exceeds 100,000, solubility of the polymer compound in the polymerization field (acidic aqueous solution) is sometimes insufficient in the preparation of the π-conjugated polymer (β). Moreover, since the solubility of the polymer compound itself in a solvent is poor, the doped π-conjugated polymer (β) is hardly dissolved in the solvent in some cases.

The doped n-conjugated polymer (β) of the present invention is prepared in the following manner using the polymer compound (A). That is to say, the doped n-conjugated polymer (β) is prepared by dissolving the polymer compound (A) in an electrolytic solvent, then adding at least one monomer selected from monomers represented by the following formulas (I) to (III) to the solution and oxidizing it with an oxidizing agent. Thus, the π-conjugated polymer (β) is formed and is simultaneously doped with the polymer compound (A). The polymer compound (A) may be used singly or as a mixture of two or more kinds. In the present specification, the "monomers represented by the formulas (I) to (III) " are also referred to as "monomers (I) to (III)", respectively.

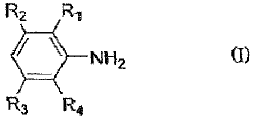

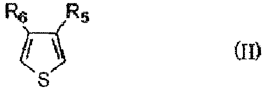

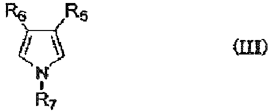

In the formula (I), R₁ to R₄ are each independently a hydrogen atom, an alkyl group of 1 to 12 carbon atoms or an alkoxy group of 1 to 10 carbon atoms. Examples of the alkyl groups include methyl group, ethyl group, propyl group and butyl group. From the viewpoint of solvent solubility, a longer alkyl group can give better solubility in a hydrophobic solvent, but from the viewpoint of conductivity of the conductive polymer, a hydrogen atom is preferable. Examples of the alkoxy groups include methoxy group, ethoxy group, propoxy group and butoxy group. Although a longer alkoxy group among them gives better solubility in a polar solvent, a hydrogen atom is preferable for the same reason as above.

The monomer represented by the formula (I) is specifically a monomer (I-1) wherein at least one of R₁ to R₄ is an alkoxy group of 1 to 10 carbon atoms, and R₁ to R₄ other than the alkoxy group are each a hydrogen atom or an alkyl group of 1 to 10 carbon atoms, or a monomer (1-2) wherein R₁ to R₄ are each a hydrogen atom or an alkyl group of 1 to 12 carbon atoms.

More specific examples of the monomers (I-1) include o-anisidine, p-anisidine, m-anisidine, methoxyaniline and butoxyaniline. More specific examples of the monomers (1-2) include aniline, o-toluidine, m-toluidine, 3,5-dimethylaniline, 2,3-dimethylaniline, 2,5-dimethylaniline, 2,6-dimethylaniline, 2-ethylaniline, 3-ethylaniline, 2-isopropylaniline, 3-isopropylaniline, 2-methyl-6-ethylaniline, 2-n-propylaniline, 2-methyl-5-isopropylaniline, 2-butylaniline, 3-butylaniline, 5,6,7,8-tetrahydro-1-naphthylamine and 2,6-diethylaniline.

In the formula (II), R₅ to R₆ are each independently a hydrogen atom, an alkyl group of 1 to 12 carbon atoms or an alkoxy group of 1 to 10 carbon atoms. Examples of the alkyl groups and the alkoxy groups, preferred ranges thereof and the reasons are the same as those described for R₁ in the formula (I). R₅ and R₆ may be bonded to each other to form an alkylenedioxy group of 1 to 8 carbon atoms. Examples of the alkylenedioxy groups include ethylenedioxy group and propylenedioxy group. Of these, ethylenedioxy group is preferable.

The monomer represented by the formula (II) is specifically a monomer (II-1) wherein at least one of R₅ to R₆ is an alkoxy group of 1 to 10 carbon atoms, R₅ to R₆ other than the alkoxy group are each a hydrogen atom or an alkyl group of 1 to 10 carbon atoms, and R₅ and R₆ may be bonded to each other to form an alkylenedioxy group of 1 to 8 carbon atoms, or a monomer (II-2) wherein R₅ to R₆ are each a hydrogen atom or an alkyl group of 1 to 12 carbon atoms.

More specific examples of the monomers (II-1) include 3-methoxythiophene, 3,4-ethylenedioxythiophene, 3,4-propylenedioxythiophene, 3,4-dimethoxythiophene, 3,4-(2',2'-dimethylpropylene)dioxythiophene and 3,4-(2',2'-diethylpropylene)dioxythiophene. More specific examples of the monomers (11-2) include thiophene, 3-methylthiophene, 3-ethylthiophene, 3-propylthiophene, 3-butylthiophene, 3-pentylthiophene, 3-hexylthiophene, 3-heptylthiophene and 3-n-octylthiophene.

In the formula (III), R₅ to R₆ are each independently a hydrogen atom, an alkyl group of 1 to 12 carbon atoms or an alkoxy group of 1 to 10 carbon atoms. Examples of the alkyl groups and the alkoxy groups, preferred ranges thereof and the reasons are the same as those described for R₁ in the formula (I). R₅ and R₆ may be bonded to each other to form an alkylenedioxy group of 1 to 8 carbon atoms. Examples of the alkylenedioxy groups and preferred ranges thereof are the same as those described for R₅ in the formula (II). R₇ is a hydrogen atom, an alkyl group of 1 to 12 carbon atoms or an aromatic group. Examples of the alkyl groups include methyl group, ethyl group, propyl group and butyl group. Of these, a hydrogen atom is preferable.

The monomer represented by the formula (III) is specifically a monomer (III-1) wherein at least one of R₅ to R₆ is an alkoxy group of 1 to 10 carbon atoms, R₅ to R₆ other than the alkoxy group are each a hydrogen atom or an alkyl group of 1 to 10 carbon atoms, R₇ is a hydrogen atom, an alkyl group of 1 to 6 carbon atoms or an aromatic group, and R₅ and R₆ may be bonded to each other to form an alkylenedioxy group of 1 to 8 carbon atoms, or a monomer (III-2) wherein R₅ to R₆ are each a hydrogen atom or an alkyl group of 1 to 12 carbon atoms, and R₇ is a hydrogen atom or an alkyl group of 1 to 12 carbon atoms.

More specific examples of the monomers (III-1) include 3,4-ethylenedioxypyrrole and 3,4-propylenedioxypyrrole. More specific examples of the monomers (III-2) include pyrrole, 3-methylpyrrole, 3-heptylpyrrole and 3-n-octylpyrrole.

The monomers (I) to (III) may be used by mixing them, or the monomers (I) to (III) may be each used singly or as a mixture of two or more kinds.

For dissolving the doped π-conjugated polymer (β) in a solvent, a combination of the monomers (I) to (III) and the monomers (a-1) to (a-3) for preparing the polymer compound (A) is appropriately selected. For example, when the monomer (I-1), the monomer (II-1) and the monomer (III-1) are used, it is preferable to use the monomer (a-3-1) in the preparation of the polymer compound (A). In this case, the doped π-conjugated polymer (β) is readily dissolved in alcohol-based solvents, such as methanol, ethanol and propylene glycol monomethyl ether, and ketone-based solvents, such as acetone and methyl ethyl ketone. When the monomer (1-2), the monomer (11-2) and the monomer (III-2) are used, it is preferable to use the monomer (a-3-2) or the monomer (a-3-3) in the preparation of the polymer compound (A). In this case, the doped π-conjugated polymer (β) is readily dissolved in hydrophobic solvents, such as toluene and ethyl acetate.

In the preparation of the π-conjugated polymer (β) doped with the polymer compound (A), for example, the electrolytic solvent such as ion-exchanged water is acidified first, when needed, and to this, the polymer compound (A) is added. Subsequently, to the mixture, the monomers (I) to (III) are added, and an oxidizing agent is further added to perform oxidation polymerization. Depending upon the solubility of the polymer compound (A) in the ion-exchanged water, an organic solvent having high hydrophilicity may be used in combination. Examples of the organic solvents having high hydrophilicity include ketone-based solvents, such as acetone and methyl ethyl ketone, and alcohol-based solvents, such as methanol, ethanol and isopropyl alcohol.

The above preparation process has advantages that: (1) an anionic field where the oxidation proceeds can be uniformly and stably provided, (2) the monomers can be stably provided while controlling stacking of the π-conjugated polymer in the polymerization growing field, (3) doping of the π-conjugated polymer with the polymer compound (A) in the polymerization growing field is accelerated, and (4) the doped π-conjugated polymer can be precipitated from the electrolytic solvent.

Examples of acidic components used for acidifying the electrolytic solvent in the above reaction include hydrochloric acid, sulfuric acid, perchloric acid, periodic acid, iron(III) chloride and iron(III) sulfate. The amount of the acidic component is in the range of about 0.5 to 4.0 mol based on 1 mol of the total amount of the monomers (I) to (III) used.

The oxidizing agent used for the reaction needs to be appropriately selected according to the redox potential of the aromatic compound (monomer) for forming the π-conjugated polymer (β), but examples of the oxidizing agents include ammoniumperoxodisulfate, potassium peroxodisulfate, sodium peroxodisulfate, iron(III) chloride, iron(III) sulfate, iron(III) tetrafluoroborate, iron(III) hexafluorophosphate, copper(II) sulfate, copper(II) chloride, copper(II) tetrafluoroborate and copper(II) hexafluorophosphate.

The ratio between the amount of the polymer compound (A) and the amount of the used monomers (I) to (III) in the reaction depends upon the desired properties of the doped π-conjugated polymer, but for example, when the polymer compound (A) has a sulfonic acid group, the ratio between them can be given as follows using the number of moles of the sulfonic acid group in the polymer compound (A) and the total number of moles of the monomers (I) to (III) used. That is to say, the polymer compound (A) is allowed to exist so that the amount of the sulfonic acid group in the compound may become 0.3 to 1.5 mol based on 1 mol of the total amount of the monomers (I) to (III). When the polymer compound (A) has a sulfonate group, the "sulfonic acid group" is replaced with "sulfonate group" in the above description. When the polymer compound (A) has a sulfonic acid group and a sulfonate group, the "sulfonic acid group" is replaced with "sulfonic acid group and sulfonate group" in the above description. Further, the polymer compound (A) may be allowed to exist in an amount of 10 to 600 parts by weight, preferably 300 to 600 parts by weight, based on 100 parts by weight of the total amount of the monomers (I) to (III) .

The oxidizing agent is usually used in an amount of about 1.0 to 3.0 mol (in terms of monovalent oxidizing agent) based on 1 mol of the total amount of the monomers (I) to (III) . However, even if the amount of the oxidizing agent is not more than 1 mol based on 1 mol of the total amount of the monomers (I) to (III), polymerization can be sufficiently carried out depending upon the degree of oxidation (degree of acidity) in the system.

The temperature of the polymerization reaction for obtaining the doped π-conjugated polymer is appropriately determined according to the types of the monomers (I) to (III) because the heating value after the oxidation reaction and ease of abstraction of hydrogen vary depending upon the types of the monomers (I) to (III) . In general, when the monomer (I) is used, the temperature of the polymerization reaction is preferably not higher than 40°C, and when the monomer (II) is used, the temperature is preferably not higher than 90°C, and when the monomer (III) is used, the temperature is preferably not higher than 20°C.

When the molecular weight of the doped π-conjugated polymer (β) is intended to be increased, the reaction temperature is made relatively lower and the reaction time is made relatively longer. When the molecular weight thereof is decreased, they are reversed.

The polymerization product obtained as above is subjected to washing, if necessary, whereby the doped n-conjugated polymer (β) that is a desired product can be obtained.

In the composition obtained by doping the π-conjugated polymer (β) with the polymer compound (A) as above, all the molecules of the π-conjugated polymer (β) are doped with the polymer compound (A) in some cases, but all the molecules of the n-conjugated polymer (β) are not doped with the polymer compound (A) in some cases. That is to say, the n-conjugated polymer (β) doped with the polymer compound (A) and the n-conjugated polymer (β) that is not doped with the polymer compound (A) may exist together.

In the π-conjugated polymer (β) doped with the polymer compound (A), the number-average molecular weight of the n-conjugated polymer (β) is usually in the range of 1,000 to 300,000. By the way, since doped conducive polymers are usually improved in flatness, they undergo stacking (crystallization) and become insoluble in solvents. The above number-average molecular weight is a value as measured by GPC using a solvent in which the n-conjugated polymer skeletonbecomes soluble after the dope component is eliminated, and is a reference value including decomposition of the π-conjugated polymer at the time of dedoping step (alkali treatment, electrical decomposition, etc.).

When such a doped π-conjugated polymer (β) is blended with a solvent, the doped π-conjugated polymer (β) is homogeneously dissolved in the solvent to obtain a solution of the doped π-conjugated polymer (β). This is attributed to lowering of stacking and lowering of crystallizablity of the resulting π-conjugated polymer (β) caused by the steric hindrance of the polymer compound (A), as previously described. Moreover, since the polymer compound (A) is a compound obtained by polymerizing the monomer (a-1) and if necessary the monomer (a-3), the property concerning hydrophobicity or hydrophilicity has been already controlled. This also contributes to excellent solubility of the doped π-conjugated polymer (β).

Examples of the solvents for preparing the solution include aromatic solvents, such as benzene, toluene and xylene; ester-based solvents, such as ethyl acetate, propyl acetate, butyl acetate, methyl lactate and ethyl lactate; ketone-based solvents, such as acetone, methyl ethyl ketone, methyl isobutyl ketone, cyclohexanone and cyclopentanone; and alcohol-based solvents, such as methanol, ethanol, isopropyl alcohol, methyl cellosolve and propylene glycol monomethyl ether acetate. The above solvents may be used singly or as a mixture of two or more kinds.

The π-conjugated polymer (β) doped with the polymer compound (A) is preferably dissolved in an amount of about 0.1 to 10% by mass in 100% by mass of the solution.

For the purposes of improving stability of the solution and enhancing electrical conductivity of a coating film formed from the solution, aromatic compounds having a hydroxyl group, such as benzyl alcohol, phenol, m-cresol, o-cresol, 2-naphthanol, 1-naphthanol, guaiacol and 2,6-dimethylphenol, may be added to the solution.

Such a compound is preferably added in an amount of about 50 to 500 parts by weight based on 100 parts by weight of the solution (total amount of the doped π-conjugated polymer (β) and the solvent).

To the solution, other compounds may be further added.

Other compounds are preferably added in an amount of about 0.1 to 500 parts by weight based on 100 parts by weight of the solution (total amount of the doped π-conjugated polymer (β) and the solvent).

The solution of the doped π-conjugated polymer (β) is preferably used for forming a conductive film. More specifically, the solution is applied to an area that needs to be imparted with electrical conductivity, and the solvent is volatilized to dryness, whereby a conductive film can be simply formed. In the solution, the doped π-conjugated polymer (β) is homogeneously dissolved, so that a smooth film can be formed, and the film has high electrical conductivity.

The solution of the doped π-conjugated polymer (β) is preferably used also for forming an electrolyte polymer layer of a dye-sensitized solar cell. In this case, an ionic compound is usually further added to the above solution.

Examples of the ionic compounds include lithium halide, lithium salt of Lewis acid and ammonium salt of Lewis acid. More specifically, LiI, NaI, KI, LiBF₄, LiPF₆, AlI₃, NiI₂, CuI, CoI₂, 1-methyl-3-propylimidazolium iodide and 1,2-dimethyl-3-propylimidazolium iodide are preferably used as the ionic compounds. As the cationic species, lithium having a low molecular weight and having high mobility is particularly preferable. On the other hand, an ammonium salt of Lewis acid is also preferably used because it is sometimes superior to the lithium salt compounds in solubility.

The ionic compound is preferably added in an amount of about 0.1 to 500 parts by weight based on 100 parts by weight of the solution (total amount of the doped π-conjugated polymer (β) and the solvent).

The polymer compound (A) is a compound obtained by polymerizing the monomer (a-2), as previously described, and hence, even if the finally obtained doped π-conjugated polymer (β) is blended with the solvent together with the ionic compound, aggregation of the π-conjugated polymer (β) can be inhibited. Thus, by the use of the finally obtained doped π-conjugated polymer (β), a solution having high stability can be formed. When the ionic compound is blended, the doped π-conjugated polymer (β) is homogeneously dissolved, but it is sometimes homogeneously microdispersed in the solvent. However, even if the doped π-conjugated polymer (β) is microdispersed, there is no problem in the preparation of the later-described electrolyte polymer layer.

As previously described, the dye-sensitized solar cell has a laminated structure in which a transparent substrate, a light-transmitting electrode, a metal oxide layer having a dye supported thereon, an electrolyte polymer layer, a counter electrode and a counter electrode substrate are laminated in this order (see, for example, International Publication No. 013942/2009 Pamphlet). When the solution is applied onto the metal oxide layer having a dye supported thereon and the solvent is volatilized to dryness, an electrolyte polymer layer is simply formed. In the solution, the doped π-conjugated polymer (β) is homogeneously dissolved or homogeneously microdispersed, so that a smooth electrolyte polymer layer can be formed, and the electrolyte polymer layer has high electrical conductivity. Thus, the electrolyte polymer layer can be formed as a solid state layer without allowing a solvent to exist in the electrolyte polymer layer, and hence, deterioration of the solar cell can be inhibited.

On the surface of such an electrolyte polymer layer as above, a counter electrode is arranged, and as this counter electrode, a platinum substrate or the like may be directly joined. Further, similarly to the light-transmitting electrode, an electrode in which platinum is deposited on a surface of a conductive metal electrode formed from a mesh of tin oxide, FTO, ITO or a conductive metal may be used, or a conductive metal electrode formed from a mesh of tin oxide, FTO, ITO or a conductive metal may be used as it is. That is to say, a barrier layer or the like is not particularly needed.

The metal oxide layer having a dye supported thereon, which is formed on the surface of the light-transmitting electrode, is describedbelow (the same description shall apply to the embodiments 1 and 2). The metal oxide used herein is a metal oxide capable of forming an n-type semiconductor electrode, and examples of such metal oxides include titanium oxide, zinc oxide, tin oxide, iron oxide, tungsten oxide, zirconium oxide, hafnium oxide and tantalum oxide. These metal oxides can be used singly or in combination.

In particular, titanium nanoxide and zinc nanoxide having phtocatalytic property are preferably used. Suchametal oxide usually has a mean primary particle diameter of 3 to 200 nm, preferably 7 to 30 nm. The metal oxide may be an aggregate of a metal oxide having such a mean primary particle diameter as above.

To such a metal oxide, a solvent inert to this metal oxide is added to form a paste of the metal oxide. When titanium nanoxide having photocatalytic property is used as the metal oxide, water, an alcohol, a water-alcohol mixed solvent or the like can be used as the solvent for preparing the paste. In order to facilitate dispersing, a dispersing agent such as paratoluenesulfonic acid can be added in a small amount, or in order to enhance aggregation property, an oxidizing agent such as hydrogen peroxide can be added in a slight amount. In order to enhance aggregation property of the metal oxide, further, a binder such as titanium tetrachloride or tetraalkoxytitanium may be added in a slight amount.

On the metal oxide, a noble metal can be supported. For example, when the titanium nanoxide having photocatalytic property is milled using a bead mill to prepare a paste thereof, a platinum colloid that is a noble metal is added to the metal oxide and ultrasonically dispersed, whereby platinum can be supported on the metal oxide. As the noble metal, silver nanocollidal particles may be used. The amount of the noble metal supported is usually in the range of 0.1 to 10 parts by weight, preferably 0 . 5 to 5 parts by weight, based on 100 parts by weight of the metal oxide. The mean primary particle diameter of the noble metal to be supported is usually in the range of 4 to 100 nm.

The paste of the metal oxide prepared as above is applied to the light-transmitting electrode formed on the surface of the transparent substrate. The coating thickness of the metal oxide paste is usually in the range of 0.5 to 100 µm, preferably 1 to 30 µm, on dry basis.

The metal oxide paste thus applied is heated to remove the solvent, whereby a metal oxide lay can be formed. The temperature in the heating is preferably set at a temperature in the vicinity of the boiling point of the solvent used. For example, when a water-ethanol mixed solvent is used, it is preferable that the metal oxide paste is heated once at about 80°C that is near the boiling point of ethanol, and thereafter, the metal oxide paste is heated at a temperature in the vicinity of 120°C that is a temperature of not lower than the boiling point of water.

In usual, the metal oxide layer cannot be sufficiently fixed by drying only, and therefore, when a glass substrate or the like is used as the transparent substrate, the substrate after drying is sintered at 400 to 500°C for about 30 minutes to 1 hour.

On the metal oxide layer thus formed, a dye is supported. Examples of the dyes used herein include ruthenium-based dyes (N3, N719, etc.), carbazole-based dyes (MK-2, etc.), porphyrin-based dyes (WMC217, WMC273, etc.), coumarin-based dyes (NKX-2311, NKX-2510, etc.), indole-based dyes (D102, D131, etc,), phthalocyanine-based dyes, merocyanine-based dyes, eosin-based dyes and squaric acid-based dyes. When a solar cell is prepared by using the composition of the embodiment 3 and the above dye in combination, the resulting solar cell is particularly excellent in conversion efficiency.

First, the dye is dissolved in a solvent capable of dissolving the dye, such as acetonitrile, to prepare a solution. The concentration of the dye solution is usually in the range of 0.01 to 0.1 mol-dye/1000 ml-solvent. In the dye solution, the transparent substrate on which the metal oxide layer has been formed as above is immersed in a given period of time, and then the substrate is pulled up. Subsequently, the substrate is washed with the same solvent as used for preparing the dye solution to remove an excess dye, and the substrate is further dried to remove the solvent, whereby the dye can be supported on the metal oxide.

The temperature for immersing the transparent substrate in the dye solution is usually in the range of 20 to 50°C. At such a temperature, the transparent substrate is usually immersed for 30 minutes to 24 hours. As the amount of the dye supported, such an amount that the whole surface of the metal oxide layer formed is coated with the dye on a level of one molecule of the dye is enough, and therefore, a dye having a carboxyl group capable of being chemically bonded to a hydroxyl group of the metal oxide surface is usually used. On this account, if sufficient chemical bonding is made on the surface, an excess dye component is removed from the surface by carrying out sufficient washing after the dye supporting treatment. On the other hand, if the washing is not sufficiently carried out and if the dye molecules are supported one upon another on the metal oxide surface, charge transfer takes place among the dye molecules, and the charge to be transferred to the n-type semiconductor is consumed among the dye molecules, sometimes resulting in marked deterioration of efficiency.

The Lewis acid or the halogen anion can be doped on the π-conjugated polymer (β), and lithium or ammonium of a cationic species that is a counter ion of the Lewis acid or the halogen anion can become a counter ion of an anionic dopant ionic species (dopant ionic species derived from the polymer compound (A)) having been dedoped from the π-conjugated polymer (β). On this account, during the course of generation of electromotive force by the dye-sensitized solar cell, the dopant ionic species and the Lewis acid or the halogen anion of the ionic compound (B) are replaced with each other in the electrolyte polymer layer to transfer charge.

Additionally, a water dispersion product containing a water-dispersible powder having polythiophene and polyaniline and an inorganic alkali metal salt is described in National Publication of International Patent No. 514753/2004. In the case where the electrolyte polymer layer is prepared by the use of such a water dispersion product, there is a problem that water remains in the dye-sensitized solar cell to cause breakage of bonding between TiO₂ and a dye. Moreover, the water dispersion product is apparently homogeneous, but actually, the interaction between the above polythiophene and polyaniline and the above inorganic alkali metal salt is small, so that there is another problem that high conversion efficiency is not obtained in the dye-sensitized solar cell using the water dispersion product. In contrast with this, the electrolyte polymer layer obtained from the composition of the embodiment 3 exhibits superior charge transfer property and electrical conductivity, and the solar cell using this electrolyte polymer layer also has excellent conversion efficiency, as previously described.

### Compositions of other embodiments

In the composition of the embodiment 1, the π-conjugated polymer (β) may be further blended. In this case, the π-conjugated polymer (β) is preferably added in an amount of about 0.1 to 600 parts by weight based on 100 parts by weight of the polymer compound (A).

In the composition of the embodiment 3, the monomer (a-2) does not have to be used in the preparation of the polymer compound (A). That is to say, in the composition of other embodiment, the polymer compound (A) is a polymer compound obtained by polymerizing the monomer (a-1) having a sulfonic acid group or a sulfonate group, and the composition for a solid electrolyte may be a composition for a solid electrolyte obtained by forming a π-conjugated polymer (β) through polymerization of a monomer in an electrolytic solvent in the presence of the polymer compound (A) and an oxidizing agent and simultaneously doping the π-conjugated polymer (β) with the polymer compound (A).

When the composition of the embodiment 1, 2 or 3 of the present invention is used as a charge transport material, the ionic compound does not have to be blended. In the compositions of the embodiments 1 to 3, iodine molecules may be added.

### Examples

The conductive polymer composition of the present invention is further described with reference to the following examples, but it should be construed that the present invention is in no way limited to those examples.

In the following examples, the molecular weight was measured by the following method.

### Molecular weight

The molecular weight was measured by GPC under the following conditions.

Name of apparatus: HLC-8120 (manufacturedby Tosoh Corporation)
Column: GF-1G7B + GF-510HQ (Asahipak: registered trademark, manufactured by Showa Denko K.K.)
Reference substance: polystyrene and sodium polystyrenesulfonate
Sample concentration: 1.0 mg/ml
Eluting solution: 50 mmol lithium chloride aqueous solution/CH3CN = 60/40 wt
Flow rate: 0.6 ml/min
Column temperature: 30°C
Detector: UV 254 nm

### Preparation Example 1-1

In a four-neck flask having a volume of 1000 cm³ and equipped with a stirrer, a nitrogen gas feed pipe, a reflux condenser, an inlet and a thermometer, 24.3 g (25% by mol) of 2-sodium sulfoethyl methacrylate (MS-2N), 25.7 g (15% by mol) of acetoacetoxyethyl methacrylate (AAEM), 42,8 g (30%bymol) of benzyl methacrylate (BzMA), 48.2 g (30% by mol) of 2-ethylhexyl methacrylate (2EHMA), 50 g of ion-exchanged water and 300 g of isopropyl alcohol (IPA) were introduced. While introducing nitrogen gas into the flask, the mixture in the flask was heated up to 70°C. Subsequently, 0.7 g of azobisisobutyronitrile was introduced into the flask, and while maintaining the temperature at 70°C, polymerization reaction was carried out for 18 hours to obtain a polymer solution (A-1) containing a polymer compound (A).

The whole amount of the resulting polymer solution (A-1) was transferred into a beaker of 2000 cm³, and 500 g of hexane was added while stirring with a stirrer. Thereafter, the mixture was allowed to stand still for 1 hour, and an oily layer containing impurities was removed. The solution on the aqueous layer side was dried with a dryer at 100°C for 24 hours. The resulting solid was dried at 100°C for 24 hours under reduced pressure and then crushed with a mortar to obtain a powder (AP-1) of a polymer compound.

A weight-average molecular weight (Mw) of the resulting polymer compound (AP-1) was measured by a gel permeation chromatograph (GPC), and as a result, it was 61,000.

### Preparation Examples 1-2 to 1-14

Polymer compounds (AP-2) to (AP-14) were obtained in the same manner as in Preparation Example 1-1, except that the monomers were replaced with monomers shown in Table 1-1 and the polymerization conditions were replaced with conditions shown in Table 1-2. Weight-average molecular weights (Mw) of the polymer compounds (AP-2) to (AP-14) are shown in Table 1-1. In Table 1-1 and Table 1-2, the monomers and the conditions of Preparation Example 1-1 are also shown.

With regard to the polymerization conditions for theAP-7, the AP-8 and the AP-14, the following points were also changed from the conditions of Example 1-1. In the case of the AP-7 and the AP-8, 300 g of MEK and 100 g of the monomer were placed in the flask, then 0.7 g of AIBN was added while introducing nitrogen, and polymerization was carried out for 18 hours . In the case of the AP-14, 100 g of water, 200 g of IPA and 100 g of the monomer were placed in the flask, then 0.5 g of AIBN was added while introducing nitrogen, and polymerization was carried out for 18 hours. In the case of the AP-7, the AP-8 and the AP-14, washing was not carried out.

**[Table 1-1]**

| | Polymer compound (A) | Monomer (a-1)(mol%) | Monomer (a-2)(mol%) | Monomer (a-3)(mol%) | Mw |
|---|---|---|---|---|---|
| Prep. Ex. 1 | AP-1 | MS-2N=25 | AAEM=15 | BzMA/2EHMA=30/30 | 61,000 |
| Prep. Ex. 2 | AP-2 | MS-2N=25 | AAEM=70 | BzMA=5 | 58,000 |
| Prep Ex 3 | AP-3 | NaSS=25 | AAEM=30 | HEMA=45 | 34,000 |
| Prep. Ex. 4 | AP-4 | MS-2N=25 | PME-100=75 | - | 71,000 |
| Prep. Ex. 5 | AP-5 | MS-2N=20 | AAEM/PME-100=15/35 | BzMA=30 | 64,000 |
| Prep. Ex. 6 | AP-6 | NaSS=40 | AAEM=10 | BzMA/2EHMA=25/25 | 31,000 |
| Prep Ex. 7 | AP-7 | 0 | AAEM=100 | 0 | |
| Prep Ex. 8 | AP-8 | 0 | AAEM=35 | BzMA=65 | |
| Prep. Ex. 9 | AP-9 | NaSS=5 | AAEM=20 | CHMA=75 | 46,000 |
| Prep Ex 10 | AP-10 | NaSS=60 | PME-100=10 | 2-EHMA=30 | 32,000 |
| Prep. Ex. 11 | AP-11 | MS-2N =30 | AAEM=5 | BzMA/2EHMA=30/35 | 63,000 |
| Prep. Ex. 12 | AP-12 | MS-2N=85 | AAEM=5 | CHMA=10 | 69,000 |
| Prep Ex 13 | AP-13 | MS-2N=20 | - | BzMA=80 | 49,000 |
| Prep. Ex. 14 | AP-14 | - | - | HEMA=100 | |

Meanings of the symbols in Table 1-1 are as follows .
MS-2N: 2-sodium sulfoethyl methacrylate
NaSS: sodium styrenesulfonate
AAEM: acetoacetoxyethyl methacrylate
PME-100: methoxydiethylene glycol methacrylate
BzMA: benzyl methacrylate
2EHMA: 2-ethylhexyl methacrylate
CHMA: cyclohexyl methacrylate
HEMA: 2-hydroxyethyl methacrylate

**[Table 1-2]**

| | Polymer compound (A) | Initiator (g) | Polymerization temperature (°C) | Polymerization time (h) |
|---|---|---|---|---|
| Prep. Ex. 1 | AP-1 | AIBN(0.7) | 70 | 18 |
| Prep. Ex. 2 | AP-2 | AIBN(0.7) | 70 | 18 |
| Prep. Ex. 3 | AP-3 | AIBN(0.7) | 70 | 18 |
| Prep. Ex. 4 | AP-4 | AIBN(0,7) | 70 | 18 |
| Prep. Ex. 5 | AP-5 | AIBN(0.7) | 70 | 18 |
| Prep. Ex. 6 | AP-6 | AIBN(0.7) | 70 | 18 |
| Prep. Ex. 7 | AP-7 | AIBN(0.8) | 80 | 18 |
| Prep. Ex. 8 | AP-8 | AIBN(0.7) | 80 | 18 |
| Prep. Ex. 9 | AP-9 | AIBN(0.7) | 70 | 18 |
| Prep. Ex. 10. | AP-10 | AIBN(0,7) | 70 | 18 |
| Prep. Ex. 11 | AP-11 | AIBN(0.7) | 70 | 18 |
| Prep. Ex. 12 | AP-12 | AIBN(0.7) | 70 | 18 |
| Prep. Ex. 13 | AP-13 | AIBN(0.7) | 70 | 18 |
| Prep. Ex. 14 | AP-14 | AIBN(0,5) | 70 | 18 |

Meaning of the symbol in Table 1-2 is as follows.
AIBN: azobisisobutyronitrile

In Table 1-2, the numerical value in parentheses in the column of "Initiator" indicates the amount of the initiator.

### Example 1

In a four-neck flask having a volume of 1000 cm³ and equipped with a stirrer, a nitrogen gas feed pipe, a reflux condenser, an inlet and a thermometer, 27.8 g of the polymer compound (AP-1) obtained in Preparation Example 1, 500 g of ion-exchanged water and 6 g of a 35% hydrochloric acid aqueous solution were introduced, and the mixture was heated to 60°C, stirred for 3 hours and then cooled down to 25°C. The solution in the flask was homogeneous and transparent.

Subsequently, to the solution in the flask, 4.65 g of aniline was added, and they were stirred to give a homogeneous emulsion, followed by cooling the emulsion down to 0°C. Then, 10 g of ammonium peroxodisulfate was dropped into the flask over a period of 2 hours, and polymerization reaction was continued for 48 hours while maintaining the temperature at 0°C.

After completion of the polymerization reaction, the whole amount of the reaction solution was subjected to vacuum filtration, then the residue was transferred into a beaker of 500 cm³, and 100 g of methanol and 100 g of ion-exchanged water were introduced. The mixture was stirred for 30 minutes with a stirrer and then subjected to vacuum filtration. The residue was dried at 20°C for 24 hours under reduced pressure to obtain a composition (E-1) (composition of embodiment 3).

### Examples 2 to 7

Compositions (E-2) to (E-7) (compositions of embodiment 3) were prepared in the same manner as in Example 1, except that the conditions were changed to those shown in Table 1-3. In Table 1-3, the monomer components and the monomer ratios of the compositions, the types and the amounts of the polymer compounds (A) used, the amount of hydrochloric acid used, the oxidizing agent used and the amount thereof, and the reaction conditions (reaction temperature and reaction time) are shown including those of Example 1.

### Reference Examples 4, 5 and 7

Compositions (EC-4), (EC-5) and (EC-7) were prepared in the same manner as in Example 1, except that the conditions were changed to those shown in Table 1-3.

### Preparation Examples 9', 10' and 3'

Polymers (β-9), (β-10) and (βC-3) were prepared in the same manner as in Example 1, except that the conditions were changed to those shown in Table 1-4.

**[Table 1-3]**

| | Composition | Main skeleton and amount | | | | Type and amount of emulsifying agent | Amount of 35% hydrochloric acid | Type and amount of oxidizing agent | Reaction temperature | Reaction time |
|---|---|---|---|---|---|---|---|---|---|---|
| | | Aniline | Pyrrole | PEDOT | Anisidine | | | | | |
| Ex. 1 | (E-1) | 4.65 | | | | AP-1 27.8g | 6g | APS 10g | 0°C | 48 hours |
| Ex. 2 | (E-2) | | | 4.2 | | AP-2 17g | 6g | FeCl3 16. 5g | 80°C | 48 hours |
| Ex. 3 | (E-3) | | | 42 | | AP-3 13.9g | 6g | FeCl3 16. 5g | 80°C | 50 hours |
| Ex. 4 | (E-4) | | | | 6.16 | AP-4 27.3g | 6g | APS 10g | 0°C | 60 hours |
| Ex. 5 | (E-5) | 4.65 | | | | AP-5 24.7g | 6g | APS 10g | 0°C | 48 hours |
| Ex. 6 | (E-6) | | | 4.2 | | AP-6 18.4g | 6g | FeCl3 16. 5g | 80°C | 50hours |
| Ex. 7 | (E-7) | 4,65 | | | | AP-6 17.3g | 6g | APS 10g | 0°C | 48 hours |
| Ref. Ex. 4 | (EC-4) | | | | 6.16 | AP-11 23g | 6g | APS 10g | 0°C | 48 hours |
| Ref. Ex. 5 | (EC-5) | | | 4.2 | | AP-12 4.8g | 6g | APS 10g | 0°C | 48 hours |
| Ref. Ex. 7 | (EC-7) | 4.65 | | | | AP-13 32.2 | 6g | APS 10g | 0°C | 48 hours |

**[Table 1-4]**

| | Polymer (*β*) | Main skeleton and amount | | | | Type and amount of emulsifying agent | Amount of 35% hydrochloric acid | Type and amount of oxidizing agent | Reaction temperature | Reaction time |
|---|---|---|---|---|---|---|---|---|---|---|
| | | Aniline | Pyrrole | PEDOT | Anisidine | | | | | |
| Prep. Ex. 9' | (*β*-9) | | | 4.2 | | P-TS 3.4g | 6g | FeCl3 16. 5g | 80°C | 50 hours |
| Prep. Ex. 10' | (*β*-10) | 4.65 | | | | P-TS 6g | 6g | APS 10g | 0°C | 48 hours |
| Prep. Ex. 3' | (*β* C-3) | | 3.35 | | | P-TS 3.4g | 6g | FeCl3 16. 5g | -5°C | 48 hours |

Meanings of the symbols in Tables 1-3 and 1-4 are as follows.
PEDOT: This means a case where 3,4-ethylenedioxythiophene was used as a monomer.
APS: ammonium peroxodisulfate
P-TS: p-toluenesulfonic acid

### Example 9

In Example 9, 30 parts by weight of the polymer (β-9) obtained in Preparation Example 9' and 70 parts by weight of the polymer compound (AP-7) obtained in Preparation Example 7 were mixed to obtain a composition of the embodiment 2 (Table 2-1).

### Example 10, Reference Example 3

In each of these examples, a composition of the embodiment 2 was obtained in the same manner as in Example 9, except that the polymer and the polymer compound were changed to the polymer (β) and the polymer compound (A) shown in Table 2-1.

That is to say, in Example 10, 30 parts by weight of the polymer (β-10) obtained in Preparation Example 10' and 70 parts by weight of the polymer compound (AP-8) obtained in Preparation Example 8 were mixed, and in Reference Example 3, 20 parts by weight of the polymer (βC-3) obtained in Preparation Example 3' and 80 parts by weight of the polymer compound (AP-10) obtained in Preparation Example 10 were mixed.

### Example 8

In Example 8, 20 parts by weight of carbon nanotubes (CNT) and 80 parts by weight of the polymer compound (AP-7) obtained in Preparation Example 7 were mixed to obtain a composition of the embodiment 1 (Table 2-1).

### Example 11, Reference Examples 1, 2, 6, 9, 11 and 12

In each of these examples, a composition of the embodiment 1 was obtained in the same manner as in Example 10, except that the polymer and the polymer compound were changed to the carbon material and the polymer compound (A) shown in Table 2-1.

### Reference Example 8

In Reference Example 8, 30 parts by weight of an aluminum powder and 70 parts by weight of the polymer compound (AP-7) obtained in Preparation Example 7 were mixed to obtain a composition (Table 2-1) .

**[Table 2-1]**

| | Charge transfer material | | | Polymer compound (A) amount (weight ratio) | Mode of blending | Sensitizing dye | Solubility in solvent | Aggregation after mixing of ion pair | Homogeneity of coating film (after addition of ion pair) |
|---|---|---|---|---|---|---|---|---|---|
| | Carbon material | Polymer (*β*) | Others | | | | | | |
| Ex 1 | | aniline | | AP-1 not more than 86% | doped | MK-2 | ○ | ○ | ○ |
| Ex 2 | | PEDOT | | AP-2 not more than 80% | doped | ↑ | ○ | ⊚ | ⊚ |
| Ex. 3 | | PEDOT | | AP-3 not more than 77% | doped | ↑ | ○ | ⊚ | ⊚ |
| Ex 4 | | anisidine | | AP-4 not more than 82% | doped | ↑ | ○ | ○ | ○ |
| Ex. 5 | | aniline | | AP-5 not more than 84% | doped | ↑ | ○ | ⊚ | ⊚ |
| Ex. 6 | | PEDOT | | AP-6 not more than 81% | doped | ↑ | × | ○ | ○ |
| Ex. 7 | | aniline | | AP-6 not more than 79% | doped | ↑ | ○ | ○ | ○ |
| Ex. 8 | CNT (20) | | | AP-7 (80) | mixed | ↑ | × | ○ | Δ |
| Ex. 9 | | PEDOT powder (30) | | AP-7 (70) | mixed | ↑ | × | ○ | ○ |
| Ex. 10 | | aniline powder (30) | | AP-8 (70) | mixed | ↑ | × | ○ | ○ |
| Ex. 11 | CB(30) | | | AP-8 (70) | mixed | ↑ | × | ○ | Δ |
| Ex. 1 | | aniline | | AP-1 not more than 86% | doped | N719 | ○ | ○ | ○ |
| Ex. 2 | | PEDOT | | AP-2 not more than 80% | doped | D149 | ○ | ⊚ | ⊚ |
| Ref. Ex. 1 | CB(30) | | | AP-1 (70) | mixed | MK-2 | × | ○ | Δ |
| Ref. Ex. 2 | fullerene (30) | | | AP-9 (70) | mixed | ↑ | × | ○ | ○ |
| Ref.Ex. 3 | | pyrrole powder (20) | | AP-10 (80) | mixed | ↑ | × | ○ | ○ |
| Ref.Ex. 4 | | anisidine | | AP-11 not more than 79% | doped | ↑ | ○ | × | × |
| Ref. Ex. 5 | | PEDOT | | AP-12 not more than 53% | doped | ↑ | ○ | ⊚ | ○ |
| Ref. Ex. 6 | CNT(30) | | | AP-12 (70) | mixed | ↑ | × | ○ | ○ |
| Ref. Ex. 7 | | aniline | | AP-13 not more than 87% | doped | ↑ | ○ | × × | × |
| Ref. Ex. 8 | | | aluminum powder(30) | AP-7 70% | mixed | ↑ | × | ○ | ○ |
| Ref.Ex. 9 | fullerene (30) | | | AP-9 70% | mixed | N719 | × | ○ | ○ |
| Ref. Ex. 3 | | pyrrole powder (20) | | AP-10 (80) | mixed | D149 | × | ○ | ○ |
| Ref. Ex. 11 | CNT(30) | | | AP-14 7 0% | mixed | MK-2 | × | ○ | Δ |
| Ref. Ex. 12 | CB (30) | | | AP-13 70% | mixed | ↑ | × | ○ | × |
| Ref. Ex. 13 | Lil/I₂ acetonitrile solution | | | | | N719 | - | - | - |

**[Table 2-2]**

| | Conversion efficiency | |
|---|---|---|
| | Initial stage | After 2 days |
| Ex. 1 | 0-5 | 0,6 |
| Ex. 2 | 0.4 | 0.5 |
| Ex. 3 | 0.3 | 0.5 |
| Ex. 4 | 0.3 | 0.4 |
| Ex. 5 | 0.6 | 0.8 |
| Ex. 6 | 0.3 | 0.4 |
| Ex. 7 | 0.3 | 0.5 |
| Ex. 8 | 0.2 | 0.2 |
| Ex. 9 | 0.4 | 0.5 |
| Ex 10 | 0.4 . | 0.5 |
| Ex 11 | 0.3 | 0.4 |
| Ex. 1 | 0.3 | 0.4 |
| Ex. 2 | 0.5 | 0.5 |
| Ref. Ex. 1 | 0.01 | 0.03 |
| Ref. Ex. 2 | 0.1 | 0.1 |
| Ref. Ex. 3 | 0.05 | 0.07 |
| Ref. Ex. 4 | 0.01 | 0.05 |
| Ref. Ex. 5 | 0.03 | 0.03 |
| Ref. Ex. 6 | 0.05 | 0.05 |
| Ref. Ex. 7 | 0.01 | 0.01 |
| Ref. Ex. 8 | 0.4 | 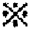 0 |
| Ref. Ex. 9 | 0.05 | 0.04 |
| Ref. Ex. 3 | 00.07 | 0.07 |
| Ref. Ex. 11 | 0.005 | 0.006 |
| Ref. Ex. 12 | 0.003 | 0.002 |
| Ref. Ex. 13 | 1.5 | 1.2 |

Meanings of the symbols in Table 2-1 are as follows.
PEDOT: poly (ethylenedioxythiophene)
CNT: carbon nanotubes
CB: carbon black D149 (available from Mitsubishi Paper Mills, Ltd.)
MK-2: available from Soken Chemical & Engineering Co., Ltd.
N719: available from Solaronics, Inc.

Table 2-2 is continued from Table 2-1.

The numerical value in parentheses in the column of "charge transfer material" indicates the amount (part (s) by weight) of the charge transfer material used. In the case of examples and reference examples in which the mode of blending is "mixed", the numerical value in parentheses in the column of "polymer compound (A) and amount" indicates the amount (part (s) by weight) of the compound (A) used. In the case of examples and reference examples in which the mode of blending is "doped", the numerical value described indicates the amount (%) of the compound (A) introduced. Here, the reason for the description of "not more than" is that the polymer compound (A) was substantially decreased in the washing stage.

### Evaluation method

### Solubility in solvent

The dry conductive polymer prepared in each of the examples and the reference examples was dissolved in a solvent (solvent in the case of using aniline or anisidine: toluene; solvent in the case of using PEDOT: propylene glycol monomethyl ether; solvent in the case of using others: MEK), and the dissolved state was visually observed. More specifically, when the mode of blending is "mixed", the polymer compound (A) and carbon or the like were dispersed in the solvent, and the dispersed state was visually observed. In the case of the doped π-conjugated polymer (β), the conductive polymer was dissolved in the solvent, and the dissolved (dispersed) state was visually observed.

The results are set forth in Table 2-1. Here, a case where the polymer compound was dissolved and a homogeneous conductive polymer solution was obtained was evaluated as o, and a case where the polymer compound was not dissolved and a conductive polymer solution was not obtained was evaluated as ×.

### Aggregation of ion pair mixture

(1) A solution was prepared by mixing the polymer compound (A) that had been dissolved in a solvent (MEK) with carbon or the like (CB, CNT, fullerene, insoluble conductive polymer) in a mixing ratio shown in Table 2-1 so that the total solid content might become 5%.
(2) A solution of the doped π-conjugated polymer (β)having a solid content of 5% was prepared (solvent: MEK).
(3) In a polyethylene cup, 0.5 g of the above solution (1) or the above solution (2) was weighed, and 0.2 g of a 10 wt% MEK solution of LiI was added.
(4) The resulting mixture was stirred, and the aggregated state of the mixture was visually observed.

The results are set forth in Table 2-1. Here, a case where after introduction of the ionic compound, aggregation did not take place and a homogeneous solution state was maintained was evaluated as ⊚; a case where after introduction of the ionic compound, aggregation took place a little but a homogeneous microdispersion was obtained was evaluated as ○; a case where after introduction of the ionic compound, aggregation took place and a homogeneously dispersed state was not obtained was evaluated as ×; and a case where after introduction of the ionic compound, aggregation took place and there was difficulty in mixing was evaluated as ××.

### Homogeneity of coating film

Potting with the solution obtained after addition and mixing of ion pair was carried out on a glass substrate, and the solution was dried at 100°C for 10 minutes. Thereafter, homogeneity of the resulting coating film was visually observed.

The results are set forth in Table 2-1. Here, a case where the coating film was homogeneous and glossy was evaluated as ⊚; a case where the coating film was homogeneous but not glossy was evaluated as ○; a case where the coating film was partly heterogeneous was evaluated as Δ; and a case where the coating film was heterogeneous and broken was evaluated as ××.

### Conversion efficiency

(1) On a FTO glass substrate having been subjected to TiO₂ sputtering, T/SP available from Solaronics, Inc. was applied with a thickness of about 5 µm (area: 5 mm²) on dry basis, and then calcined at 500°C for 30 minutes.
(2) The calcined substrate of the above (1) was impregnated with a dye solution and allowed to stand for 24 hours at room temperature.
(3) Potting with the solution obtained after mixing of ion pair was carried out on TiO₂ of the die-fixed substrate of the above (2), and the solution was dried at 100°C for 10 minutes to form a film having a thickness of about 40 µm on dry basis.
(4) The substrate of the above (3) and a glass substrate having been subjected to Pt sputtering were laminated together to fix them, and conversion efficiency was measured with a solar simulator (AM 1.5).
(5) Comparative Example 13 is an example for comparative evaluation using a wet DSC cell. This wet DSC cell was prepared in the following manner. On the substrate of the above (2), a film having a thickness of 100 µm a portion of which corresponding to TIO₂ of the substrate had been removed was superposed, and potting with an electrolytic solution was carried out on TiO₂ of the substrate . Thereafter, the thus treated substrate and a Pt glass substrate were laminated together to fix them.

Electrolyte: LiI/I₂/t-BP = 0.1 mol/0.05 mol/0.5 mol (acetonitrile solution)

In Table 2-2, the results obtained in the initial stage and obtained after 2 days are set forth.

In Example 1, the above evaluation was carried out in the case of using MK-2 as a sensitizing dye and in the case of using N719 as a sensitizing dye (Table 2-1, Table 2-2). Also in Example 2 and Reference Example 3, the above evaluation was carried out using different dyes.

## Claims

1. A composition for a solid electrolyte, comprising a polymer compound (A) and a charge transfer material, wherein the polymer compound (A) is a polymer compound obtained by polymerizing a monomer (a) comprising
a monomer (a-1) having a sulfonic acid group or a sulfonate group and a polymerizable vinyl group and
a monomer (a-2) having a group having chelating ability and a polymerizable vinyl group, wherein the monomer (a-2) has a group represented by the following formula (IV) or a group represented by the following formula (V): 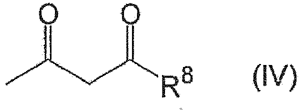 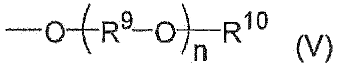 wherein R⁸ is an alkyl group of 1 to 4 carbon atoms, R⁹ is an ethylene group, R¹⁰ is an alkyl group of 1 to 4 carbon atoms, and n is an integer of 1 to 5.

2. The composition for a solid electrolyte as claimed in claim 1, wherein the charge transfer material is a carbon material and/or a π-conjugated polymer (β).

3. The composition for a solid electrolyte as claimed in claim 2, wherein the monomer (a-2) is contained in an amount of not less than 30% by mol in the monomer (a).

4. The composition for a solid electrolyte as claimed in claim 2 or 3, wherein the monomer (a-1) is contained in an amount of not more than 4% by mol in the monomer (a).

5. The composition for a solid electrolyte as claimed in any one of claims 2 to 4, wherein the carbon material is at least one substance selected from graphite, carbon black, fullerene and carbon nanotube.

6. The composition for a solid electrolyte as claimed in any one of claims 2 to 5, wherein the π-conjugated polymer (β) is a π-conjugated polymer obtained by polymerizing at least one monomer selected from monomers represented by the following formulas (I) to (III): 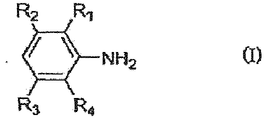 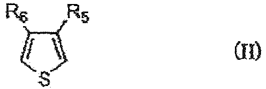 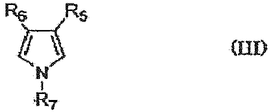 wherein R₁ to R₆ are each independently a hydrogen atom, an alkyl group of 1 to 12 carbon atoms or an alkoxy group of 1 to 10 carbon atoms, R₇ is a hydrogen atom, an alkyl group of 1 to 12 carbon atoms or an aromatic group, and R₅ and R₆ may be bonded to each other to form an alkylenedioxy group of 1 to 8 carbon atoms.

7. The composition for a solid electrolyte as claimed in claim 2, wherein
the charge transfer material is a π-conjugated polymer (β), and
the composition for a solid electrolyte is obtained by polymerizing a monomer in an electrolytic solvent in the presence of the polymer compound (A) and an oxidizing agent to form the π-conjugated polymer (β) and to simultaneously dope the π-conjugated polymer (β) with the polymer compound (A).

8. The composition for a solid electrolyte as claimed in claim 7, wherein the polymer compound (A) is a polymer compound obtained by polymerizing 10 to 50% by mol of the monomer (a-1), 10 to 90% by mol of the monomer (a-2) and 0 to 70% by mol of another monomer (a-3), the total amount of said monomers (a-1) to (a-3) being 100% by mol, wherein the monomer (a-3) is at least one monomer selected from the group consisting of a monomer (a-3-1) having a hydrophilic group and a polymerizable vinyl group, a monomer (a-3-2) having an aromatic group or an alicyclic group and a polymerizable vinyl group and a monomer (a-3-3) having an alkyl group and a polymerizable vinyl group.

9. The composition for a solid electrolyte as claimed in claim 7 or 8, wherein the π-conjugated polymer (β) is a π-conjugated polymer obtained by polymerizing at least one monomer selected from monomers represented by the following formulas (I) to (III): 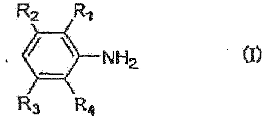 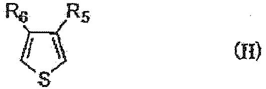 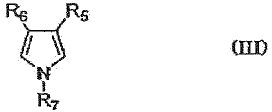 wherein R₁ to R₆ are each independently a hydrogen atom, an alkyl group of 1 to 12 carbon atoms or an alkoxy group of 1 to 10 carbon atoms, R₇ is a hydrogen atom, an alkyl group of 1 to 12 carbon atoms or an aromatic group, and R₅ and R₆ may be bonded to each other to form an alkylenedioxy group of 1 to 8 carbon atoms.

10. A charge transport material for a solar cell, using the composition for a solid electrolyte as claimed in any one of claims 1 to 9.

## Patentansprüche

1. Zusammensetzung für einen Festelektrolyten, umfassend eine Polymerverbindung (A) und ein Ladungsübertragungsmaterial, wobei die Polymerverbindung (A) eine Polymerverbindung ist, die erhalten ist durch Polymerisieren eines Monomers (a), umfassend
ein Monomer (a-1) mit einer Sulfonsäuregruppe oder einer Sulfonatgruppe und einer polymerisierbaren Vinylgruppe und
ein Monomer (a-2) mit einer Gruppe mit Chelatbildungsvermögen und einer polymerisierbaren Vinylgruppe, wobei das Monomer (a-2) eine Gruppe, dargestellt durch die folgende Formel (IV), oder eine Gruppe, dargestellt durch die folgende Formel (V), aufweist: 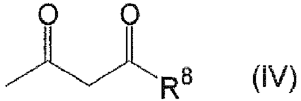 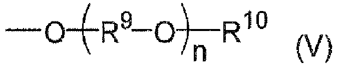 wobei R⁸ ein Alkylrest mit 1 bis 4 Kohlenstoffatomen ist, R⁹ eine Ethylengruppe ist, R¹⁰ ein Alkylrest mit 1 bis 4 Kohlenstoffatomen ist, und n eine ganze Zahl von 1 bis 5 ist.

2. Zusammensetzung für einen Festelektrolyten nach Anspruch 1, wobei das Ladungsübertragungsmaterial ein Kohlenstoffmaterial und/oder ein π-konjugiertes Polymer (β) ist.

3. Zusammensetzung für einen Festelektrolyten nach Anspruch 2, wobei das Monomer (a-2) in einer Menge von nicht weniger als 30 Mol-% in dem Monomer (a) enthalten ist.

4. Zusammensetzung für einen Festelektrolyten nach Anspruch 2 oder 3, wobei das Monomer (a-1) in einer Menge von nicht mehr als 4 Mol-% in dem Monomer (a) enthalten ist.

5. Zusammensetzung für einen Festelektrolyten nach einem der Ansprüche 2 bis 4, wobei das Kohlenstoffmaterial mindestens ein Stoff, ausgewählt aus Graphit, Ruß, Fulleren und Kohlenstoffnanoröhre, ist.

6. Zusammensetzung für einen Festelektrolyten nach einem der Ansprüche 2 bis 5, wobei das π-konjugierte Polymer (β) ein π-konjugiertes Polymer ist, das erhalten ist durch Polymerisieren von mindestens einem Monomer, ausgewählt aus Monomeren, dargestellt durch die folgenden Formeln (I) bis (III) : 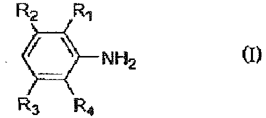 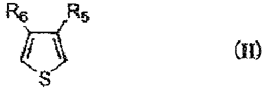 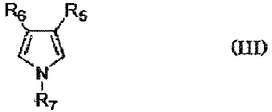 wobei R₁ bis R₆ jeweils unabhängig voneinander ein Wasserstoffatom, ein Alkylrest mit 1 bis 12 Kohlenstoffatomen oder ein Alkoxyrest mit 1 bis 10 Kohlenstoffatomen sind, R₇ ein Wasserstoffatom, ein Alkylrest mit 1 bis 12 Kohlenstoffatomen oder ein aromatischer Rest ist, und R₅ und R₆ miteinander verbunden sein können, um einen Alkylendioxyrest mit 1 bis 8 Kohlenstoffatomen zu bilden.

7. Zusammensetzung für einen Festelektrolyten nach Anspruch 2, wobei
das Ladungsübertragungsmaterial ein π-konjugiertes Polymer (β) ist, und
die Zusammensetzung für einen Festelektrolyten erhalten ist durch Polymerisieren eines Monomers in einem elektrolytischen Lösungsmittel in Gegenwart der Polymerverbindung (A) und eines Oxidationsmittels, um das π-konjugierte Polymer (β) zu bilden und um gleichzeitig das π-konjugierte Polymer (β) mit der Polymerverbindung (A) zu dotieren.

8. Zusammensetzung für einen Festelektrolyten nach Anspruch 7, wobei die Polymerverbindung (A) eine Polymerverbindung ist, die erhalten ist durch Polymerisieren von 10 bis 50 Mol-% des Monomers (a-1), 10 bis 90 Mol-% des Monomers (a-2) und 0 bis 70 Mol-% eines anderen Monomers (a-3), wobei die Gesamtmenge der Monomere (a-1) bis (a-3) 100 Mol-% beträgt, wobei das Monomer (a-3) mindestens ein Monomer, ausgewählt aus der Gruppe bestehend aus einem Monomer (a-3-1) mit einer hydrophilen Gruppe und einer polymerisierbaren Vinylgruppe, einem Monomer (a-3-2) mit einem aromatischen Rest oder einem alicyclischen Rest und einer polymerisierbaren Vinylgruppe, und einem Monomer (a-3-3) mit einemAlkylrest undeiner polymerisierbaren Vinylgruppe, ist.

9. Zusammensetzung für einen Festelektrolyten nach Anspruch 7 oder 8, wobei das π-konjugierte Polymer (β) ein π-konjugiertes Polymer ist, das erhalten ist durch Polymerisieren von mindestens einem Monomer, ausgewählt aus Monomeren, dargestellt durch die folgenden Formeln (I) bis (III): 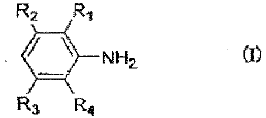 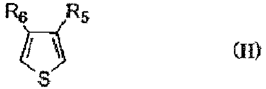 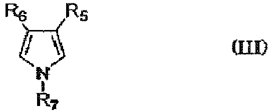 wobei R₁ bis R₆ jeweils unabhängig voneinander ein Wasserstoffatom, ein Alkylrest mit 1 bis 12 Kohlenstoffatomen oder ein Alkoxyrest mit 1 bis 10 Kohlenstoffatomen sind, R₇ ein Wasserstoffatom, ein Alkylrest mit 1 bis 12 Kohlenstoffatomen oder ein aromatischer Rest ist, und R₅ und R₆ miteinander verbunden sein können, um einen Alkylendioxyrest mit 1 bis 8 Kohlenstoffatomen zu bilden.

10. Ladungstransportmaterial für eine Solarzelle, unter Verwendung der Zusammensetzung für einen Festelektrolyten nach einem der Ansprüche 1 bis 9.

## Revendications

1. Composition pour un électrolyte solide, comprenant un composé polymère (A) et un matériau à transfert de charge, le composé polymère (A) étant un composé polymère obtenu par la polymérisation d'un monomère (a) comprenant
un monomère (a-1) ayant un groupe acide sulfonique ou un groupe sulfonate et un groupe vinyle polymérisable, et
un monomère (a-2) ayant un groupe ayant une capacité de chélation et un groupe vinyle polymérisable, le monomère (a-2) ayant un groupe représenté par la formule ci-dessous (IV) ou un groupe représenté par la formule ci-dessous (V) : 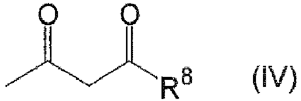 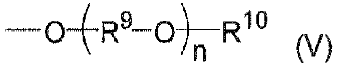 R⁸ étant un groupe alkyle de 1 à 4 atomes de carbone, R⁹ étant un groupe éthylène, R¹⁰ étant un groupe alkyle de 1 à 4 atomes de carbone et n étant un entier de 1 à 5.

2. Composition pour un électrolyte solide selon la revendication 1, le matériau à transfert de charge étant un matériau carboné et/ou un polymère π-conjugué (β).

3. Composition pour un électrolyte solide selon la revendication 2, la proportion du monomère (a-2) contenu dans le monomère (a) n'étant pas inférieure à 30 % mol.

4. Composition pour un électrolyte solide selon la revendication 2 ou 3, la proportion du monomère (a-1) contenu dans le monomère (a) n'étant pas supérieure à 4 % mol.

5. Composition pour un électrolyte solide selon l'une quelconque des revendications 2 à 4, le matériau carboné étant au moins une substance sélectionnée parmi le groupe se composant de : graphite, noir de carbone, fullerène et nanotube de carbone.

6. Composition pour un électrolyte solide selon l'une quelconque des revendications 2 à 5, le polymère π-conjugué (β) étant un polymère π-conjugué obtenu en polymérisant au moins un monomère sélectionné parmi les monomères représentés par les formules ci-dessous (I) à (III) : 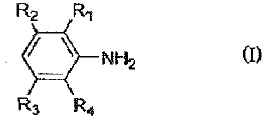 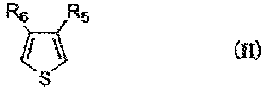 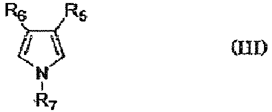 R₁ à R₆ représentant chacun indépendamment un atome d' hydrogène, un groupe alkyle de 1 à 12 atomes de carbone ou un groupe alcoxyle de 1 à 10 atomes de carbone, R₇ étant un atome d'hydrogène, un groupe alkyle de 1 à 12 atomes de carbone ou un groupe aromatique, et R₅ et R₆ pouvant être liés l'un à l'autre pour former un groupe alkylènedioxy de 1 à 8 atomes de carbone.

7. Composition pour un électrolyte solide selon la revendication 2,
le matériau à transfert de charge étant un polymère π-conjugué (β), et
la composition pour un électrolyte solide étant obtenue en polymérisant un monomère dans un solvant électrolytique en présence du composé polymère (A) et d'un agent d'oxydation pour former le polymère π-conjugué (β) et pour doper simultanément le polymère π-conjugué (β) avec le composé polymère (A).

8. Composition pour un électrolyte solide selon la revendication 7, le composé polymère (A) étant un un composé polymère obtenu en polymérisant 10 à 50 % mol du monomère (a-1), 10 à 90 % du monomère (a-2) et 0 à 70 % mol d'un autre monomère (a-3), la teneur totale desdits monomères (a-1) à (a-3) étant de 100 % mol, le monomère (a-3) étant au moins un monomère sélectionné parmi le groupe se composant de : un monomère (a-3-1) ayant un groupe hydrophile et un groupe vinyle polymérisable, un monomère (a-3-2) ayant un groupe aromatique ou un groupe alicyclique et un groupe vinyle polymérisable, et un monomère (a-3-3) ayant un groupe alkyle et un groupe vinyle polymérisable.

9. Composition pour un électrolyte solide selon l' une quelconque des revendications 7 ou 8, le polymère π-conjugué (β)étant un polymère π-conjugué obtenu en polymérisant au moins un monomère sélectionné parmi les monomères représentés par les formules ci-dessous (I) à (III) : 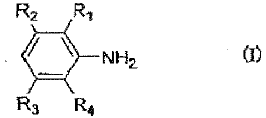 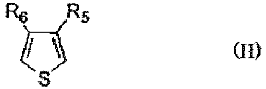 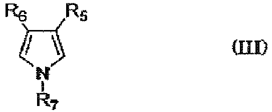 R₁ à R₆ représentant chacun indépendamment un atome d' hydrogène, un groupe alkyle de 1 à 12 atomes de carbone ou un groupe alcoxyle de 1 à 10 atomes de carbone, R₇ étant un atome d'hydrogène, un groupe alkyle de 1 à 12 atomes de carbone ou un groupe aromatique, et R₅ et R₆ pouvant être liés l'un à l'autre pour former un groupe alkylènedioxy de 1 à 8 atomes de carbone.

10. Matériau à transport de charge pour une cellule solaire, utilisant la composition pour un électrolyte solide selon l'une quelconque des revendications 1 à 9.
